# EUROPÄISCHE PATENTSCHRIFT

(11) **EP 1 609 638 B1**
(45) Veröffentlichungstag und Bekanntmachung des Hinweises auf die Patenterteilung: **07.04.2010**
(21) Anmeldenummer: 05013027.7
(22) Anmeldetag: 16.06.2005
(51) Int. Cl.: B60H 1/00

(54) **Verfahren zum Betreiben einer Klimatisierungseinrichtung für Fahrzeuge**
Method for the operation of an air conditioning for vehicles
Procédé de fonctionnement d'un appareil de climatisation pour véhicules

(30) Priorität: 23.06.2004 DE 102004030074
(43) Veröffentlichungstag der Anmeldung: 28.12.2005
(73) Patentinhaber: Behr GmbH & Co. KG, 70469 Stuttgart (DE)
(72) Erfinder: Baruschke, Wilhelm Dipl.-Ing., 73117 Wangen (DE); Bureau, Cathy Dipl.-Ing., 48009 Birmingham MI (US); Lochmahr, Karl Dipl.-Ing. (FH), 71665 Vaihingen/Enz (DE); Pitz, Eric, 70199 Stuttgart (DE); Strauss, Thomas Dipl.-Ing. (FH), 73274 Notzingen (DE)

(56) Entgegenhaltungen:
- EP-A- 0 995 621
- EP-A- 1 314 590
- WO-A-2004/007224
- DE-A1- 19 906 497
- FR-A- 2 846 280

## Beschreibung

Die vorliegende Erfindung betrifft ein Verfahren zum Betreiben einer Klimatisierungseinrichtung für Fahrzeuge. Es ist bekannt, bei Fahrzeugen Klimatisierungseinrichtungen vorzusehen, bei denen aufgrund einer Temperaturvorgabe im Innenraum des Fahrzeugs eine Temperatur eingeregelt wird. Dabei ist es zum einen bekannt, ein Fahrzeug zu beheizen, wozu ein Heizungswärmetauscher dient, welcher von der dem Innenraum zugeführten Luft durchströmt wird und der mit dem Kühlwasser der Brennkraftmaschine, welche das Fahrzeug antreibt, erwärmt wird. Zum anderen ist es in Fahrzeugen bekannt, zum Kühlen des Fahrzeuginnenraums eine Klimaanlage vorzusehen, wobei ein mit der Brennkraftmaschine gekoppelter Kompressor ein Kühlmedium verdichtet und unter Druck setzt. Das unter Druck stehende Kühlmedium erfährt eine Druckentspannung in einem Drosselorgan. Durch die Entspannung verdampft das Kühlmedium und nimmt beispielsweise aus der über den Verdampfer geführten Luft Wärme auf. Der über den Verdampfer geführten Luft wird dabei Wärme entzogen, wodurch die Luft abgekühlt wird. Anschließend wird die gekühlte Luft in den Fahrzeuginnenraum geführt, wobei diese auch einen geringeren Feuchtigkeitsanteil aufweist als die Umgebungsluft.

Daneben stellt es eine bekannte Maßnahme zur Reduktion des Kraftstoffverbrauchs eines Fahrzeugs dar, wenn die Brennkraftmaschine bei vorübergehendem Fahrzeugstillstand, wie er beispielsweise zum Halten an einer Ampel auftritt, abzuschalten. Dabei erfolgt das Abschalten der Brennkraftmaschine beim Auftreten bestimmter Kriterien, beispielsweise Bedingungen hinsichtlich des Fahrzeugstillstands automatisch, ebenso wie die Inbetriebnahme der Brennkraftmaschine bei gewissen Bedingungen, insbesondere wenn der Wunsch des Fahrers, das Fahrzeug wieder zu bewegen, detektiert wird.

Bei üblichen Klimatisierungseinrichtungen wird der Kompressor der Kälteanlage üblicherweise über einen mit dem Motor verbundenen (Zahn-) Riemen oder eine entsprechende Steuerkette angetrieben. Daraus ergibt sich, dass der Kompressor der Klimaanlage nur dann arbeitet, wenn die Brennkraftmaschine in Betrieb ist. Bei einer Unterbrechung des Betriebs der Brennkraftmaschine, beispielsweise in den vorgenannten Haltesituationen, kann dann die zur Klimatisierung des Innenraums notwendige Kälteleistung nicht jederzeit bereitgestellt werden. Der Verdampfer der Klimatisierungseinrichtung erwärmt sich zu schnell und die durchströmende Luft wird zuwenig abgekühlt. In Abhängigkeit der Sonneneinstrahlung und der Außentemperatur tritt rasch eine merkbare Erwärmung des Fahrzeuginnenraums um wenige Grad Celsius und der Ausblasstemperatur der zugeführten Luft in den Fahrzeuginnenraum um einige Grad Celsius auf, und dies schon dann, wenn die Unterbrechung des Betriebs der Brennkraftmaschine nur wenige Sekunden dauert.

Da die Luft beim Betrieb der Klimatisierungseinrichtung gekühlt und entfeuchtet wird, und anschließend gegebenenfalls wieder erwärmt wird, sammelt sich am Verdampfer Kondenswasser, welches bei einer Unterbrechung des Betriebs der Brennkraftmaschine und einem Anstieg der Durchströmtemperatur im Bereich des Verdampfers dann in den Innenraum eingeblasen wird, sobald die Temperatur die Taupunkttemperatur übersteigt. Der daraus resultierende Feuchtigkeitsanstieg wird von den Fahrzeuginsassen als sehr unangenehm und unkomfortabel empfunden. Er ist daher zu vermeiden.

Darüber hinaus ist es bekannt, um den Energieverbrauch einer Klimatisierungseinrichtung zu reduzieren, die Bereitstellung der Kälteleistung möglichst bedarfsgerecht und nicht im Überfluss vorzunehmen. Es wird insbesondere die Luftaustrittstemperatur aus dem Verdampfer auf einen möglichst hohen Wert eingeregelt und/oder der Luftmassenstrom so reduziert oder die Luft mit möglichst niedriger Enthalpie angesaugt, um die erforderliche Kälteleistung des Kältekreislaufs möglichst gering zu halten und somit auch an der Reduktion des klimatisierungseinrichtungsbedingten Kraftstoffverbrauchs mitzuwirken. Mögliche Verdampferaustrittstemperaturen der Luft können in der Praxis zwischen dem Gefrierpunkt von Wasser und ca. 12° bis 14° liegen.

Um Fahrzeuge, bei welchen der Betrieb der Brennkraftmaschine im Fahrzeugstillstand unterbrechbar ist, mit einer Klimatisierungseinrichtung auszurüsten, wurden schon diverse Arten von Kältespeichern vorgesehen. Eine Möglichkeit besteht darin, im Kältekreislauf einen Sekundärkreislauf vorzusehen, beispielsweise beschrieben in der DE 197 53 601, welcher durch Phasenübergang eines Speichermediums Kälte speichert (Übergang flüssigfest des Speichermediums). Bei unterbrochenem Betrieb der Brennkraftmaschine des Fahrzeugs wird der umgekehrte Phasenübergang zum Kühlen der durchströmenden Luft genutzt. Eine andere Form eines Kältespeichers kann darin bestehen, einen Teil des Verdampfers zeitweise abzusperren, um diesen nicht von der durchströmenden Luft zu erwärmen. In diesem Teil des Verdampfers ist das Kältemittel, das ihn durchströmt dann besonders kalt und weit unterhalb der Temperatur, die erforderlich wäre, um die erwünschte Ausblastemperatur der Luft aus dem Verdampfer aufrecht zu erhalten. Erst wenn der Kompressor der Kühlanlage außer Betrieb genommen wird, wird die durchströmende Luft über den zuvor gesperrten Bereich des Verdampfers geblasen. Sie kann in dem sehr kalten Verdampferblock für eine hinreichende Zeitdauer abgekühlt werden, so dass der Taupunkt nicht überschritten wird. Der Effekt eines solchen Kältespeichers dauert dabei umso länger, je tiefer die Blocktemperatur und je größer dessen Wärmekapazität ist.

Eine weitere Lösung zum Erhöhung der thermischen Kapazität des Verdampfers, welche einen Betrieb der Kühlfunktion während eines Unterbrechens des Betriebs der Brennkraftmaschine ermöglicht, ist in der EP 0 995 621 A2 beschrieben. Hierin wird vorgeschlagen, den Verdampfer durch das bei der Abkühlung der feuchten Luft angefallene Kondensat zumindest bereichsweise zu vereisen und damit eine Arte Eisspeicher zu erzeugen und im Falle eines abgeschalteten Kompressors während der Unterbrechung des Betriebs der Brennkraftmaschine die Luft durch das dann tauende Eis abzukühlen. Darüber hinaus ist es aus der DE 101 56 944 A1 bekannt, einen sogenannten Speicherverdampfer bereitzustellen, in dem mittels Phasenübergang eines Latentmediums Wärmeenergie gespeichert werden kann, wobei auch hier die Beladung während der Fahrt erfolgt und bei abgestelltem Motor die durchströmende Luft dann durch das Auftauen des Speichermediums gekühlt wird.

Die EP 0 995 621 A2 und EP 1 314 590 A2 und DE 199 06 497 A1 offenbaren ein Verfahren zum Betreiben einer Klimatisierungseinrichtung für Fahrzeuge mit einer Brennkraftmaschine zum Betreiben des Fahrzeugs und einer Einrichtung zum Unterbrechen des Betriebs der Brennkraftmaschine im Fahrzeugstillstand für die Dauer des Fahrzeugstillstands, wobei im Betrieb des Fahrzeugs das Aufladen wenigstens eines Kältespeichers erfolgt. Die FR 2 846 280 offenbart eine Fahrzeugklimaanlage, aufweisend einen Kühler zur Kühlung der Luft, die in das Innere eines Fahrzeugs geblasen wird, einen Kältemittelzirkulationskreislauf, der einen Kompressor zur Komprimierung des Kältemittels und eine Heizung zu der das Motorkühlwasser fließt, enthält, wobei ein Wärmeaustausch zwischen dem Motorkühlwasser, das in der Heizung zirkuliert und dem Kältemittel, das durch zu dem Kühler strömt, durchgeführt werden kann.

Aufgabe der Erfindung ist es, eine Klimatisierungseinrichtung eines Fahrzeugs derart zu betreiben, dass sowohl das Erzeugen als auch das Speichern der Energie wenigstens für den Kühlbetrieb der Klimatisierungseinrichtung in möglichst kraftstoffsparender, günstiger Weise erfolgt, und zugleich gewährleistet ist, dass möglichst jederzeit ein Betrieb der Klimatisierungseinrichtung zumindest so aufrecht erhalten werden kann, dass die Ausblastemperatur der zuströmenden Luft in den Fahrzeuginnenraum die Taupunkttemperatur auch bei einem längeren Halt oder im sogenannten Stop-and-Go-Verkehr nicht überschreitet. Dabei soll die für das Betreiben der Klimatisierungseinrichtung erforderliche Energie, welche insbesondere in der Brennkraftmaschine durch Verbrennen von Kraftstoff erzeugt wird, möglichst gering gehalten werden.

Das der Erfindung zugrunde liegende Problem liegt insbesondere darin, zwei einander widersprechende Zielstellungen miteinander zu vereinbaren. Zum einen die Regelung der Temperatur am Verdampferaustritt während des Betriebes der Klimaanlage, wobei die Temperatur am Verdampferaustritt möglichst hoch gewählt wird, um den Kraftstoffverbrauch niedrig zu halten und zum anderen ein Beladen des Kältespeichers durchzuführen, wobei für das Beladen eines Kältespeichers für thermische Energie möglichst tiefe Temperaturen des Kältekreislaufs benötigt werden, um den Speicher möglichst weitgehend zu laden. Die der Erfindung zugrunde liegende Aufgabe wird durch ein Verfahren gemäß dem Anspruch 1 gelöst.

Ein Verfahren zum Betreiben einer Klimatisierungseinrichtung für Fahrzeuge gibt vor, dass das Fahrzeug über eine Brennkraftmaschine zum Betreiben des Fahrzeugs und einer Einrichtung zum Unterbrechen des Betriebs der Brennkraftmaschine im Fahrzeugstillstand für die Dauer des Fahrzeugstillstands verfügt.

Es ist dabei vorgesehen, dass im Betrieb des Fahrzeugs das Aufladen wenigstens eines Kältespeichers erfolgt, wobei während einer Unterbrechung des Betriebs der Brennkraftmaschine ein Kühlen des Fahrzeuginnenraums unter Ausnutzung der im Kältespeicher gespeicherten Energie erfolgen kann. Es entspricht der Erfindung, dass das Beladen des Kältespeichers in Abhängigkeit von Betriebszuständen des Fahrzeugs erfolgt.

Dadurch, dass das Beladen des Kältespeichers in Abhängigkeit von Betriebszuständen des Fahrzeugs vorgenommen wird, kann das Beladen auf die Fälle reduziert werden, in denen wahrscheinlich auch ein zur Verfügungstellen von Kälte durch den Kältespeicher erforderlich ist. In allen anderen Fällen kann das Aufladen des Kältespeichers unterbleiben und somit wird keine Energie für das Beladen des Kältespeichers und das Aufrechterhalten seines Ladungszustandes benötigt. Insbesondere kann dann, wenn ein Beladen des Kältespeichers nicht erforderlich ist, die Temperatur der Luft stromabwärts des Verdampfers, der Verdampferausblasstrom auf einem möglichst hohen Niveau gehalten werden, und der Verdampfer muss nicht so betrieben werden, dass die größte Kälteleistung erforderlich ist, wenn dies nicht entweder zum Temperieren des Innenraums oder aber zum Aufladen des Kältespeichers erforderlich ist.

Gemäß vorteilhafter Ausgestaltung der Erfindung ist vorgesehen, dass als Betriebszustand des Fahrzeugs eine die Wahrscheinlichkeit des Auftretens einer Unterbrechung des Betriebs der Brennkraftmaschine repräsentierende Größe herangezogen wird. Bei dieser Größe kann es sich sowohl um Zustandsgrößen des Fahrzeugs, als auch um aus dem Fahrzeugbetrieb hergeleitete Größen handeln, die für sich genommen oder in Kombination miteinander darauf schließen lassen, dass die Wahrscheinlichkeit des Auftretens einer Unterbrechung des Betriebs der Brennkraftmaschine so groß ist, dass das Beladen des Kältespeichers erfolgen soll. Als Zustandsgrößen können insbesondere den Betrieb des Fahrzeugs charakterisierende Größen wie die Fahrzeuggeschwindigkeit herangezogen werden, eine weitere Möglichkeit ist allerdings auch, aufgrund eines Navigationssystems und einer Positionsbestimmung des Fahrzeugs abzuleiten, ob das Fahrzeug im Stadtverkehr betrieben wird und somit eine mehrfaches Anhalten und Abwarten in Ampelstopps, zu erwarten ist.

Es entspricht einer bevorzugten Ausgestaltung der Erfindung, wenn das Beladen des Kältespeichers der Klimatisierungseinrichtung in Abhängigkeit der Fahrzeuggeschwindigkeit als vorzugsweise einziger maßgeblicher Betriebszustand des Fahrzeugs erfolgt. Es ist dabei insbesondere vorgesehen, dass ein Beladen des Kältespeichers dann erfolgt, wenn die Fahrzeuggeschwindigkeit eine Grenzgeschwindigkeit unterschreitet. Dabei ist gemäß bevorzugter Ausgestaltung die Grenzgeschwindigkeit so gewählt, dass sie oberhalb der im Stadtverkehr zulässigen Fahrgeschwindigkeiten liegt. Sie liegt somit insbesondere im Bereich von 60 bis 80 km/h und insbesondere bei ca. 70 km/h. Bei einem Betrieb des Fahrzeugs mit einer Geschwindigkeit oberhalb der Grenzgeschwindigkeit ist nicht zu erwarten, dass das Fahrzeug für längere Zeit oder mehrfach hintereinander in den Stillstand gebracht wird und im Stillstand ein Unterbrechen des Betriebs der Brennkraftmaschine erfolgt. Es ist insbesondere zu erwarten, dass sich das Fahrzeug auf einer Überland- oder Autobahnfahrt befindet und der Verkehr fließend ist, so dass mit einem Stopp des Fahrzeugs nicht zu rechnen ist. In diesem Betriebszustand ist daher nicht erforderlich, den Kältespeicher der Klimatisierungseinrichtung aufzuladen bzw. die in ihm gespeicherte Energiedifferenz zur Außentemperatur aufrecht zu erhalten indem ein ständiges Nachladen oder Weiterkühlen des Kältespeichers vorgenommen wird.

Es entspricht einer vorteilhaften Ausgestaltung der Erfindung, wenn das Beladen des Kältespeichers in Abhängigkeit einer Temperaturvorgabe für den Innenraum des Fahrzeugs erfolgt. Die Temperaturvorgabe für den Innenraum des Fahrzeugs wird dabei insbesondere von den Fahrzeuginsassen bestimmt. Diese Temperatur legt fest, ob im Betrieb der Klimatisierungseinrichtung ein Kühlen oder ein Heizen erfolgt und in welchem Maß ein Kühlen oder Heizen des Fahrzeuginnenraums benötigt wird. Somit kann, wenn aufgrund der Temperaturvorgabe für den Innenraum des Fahrzeugs absehbar ist, dass eine Kälteleistung während einer Unterbrechung des Betriebs der Brennkraftmaschine nicht benötigt wird, ein Beladen des Kältespeichers unterbleiben. Es kann also aufgrund der Temperaturvorgabe festgestellt werden, ob Bedarf an Kälteleistung bei einer Unterbrechung des Betriebs der Brennkraftmaschine zu erwarten ist oder nicht und in dem Fall, in dem das nicht zu erwarten ist, ein Aufladen des Kältespeichers unterbleiben und somit eine Energieeinsparung für die Antriebsleistung und Antriebsenergie der Brennkraftmaschine im Fahrzeugbetrieb erfolgen.

Es entspricht besonders vorteilhafter, weiterführender Ausgestaltung, dass das Beladen des Kältespeichers nur dann erfolgt, wenn die Außentemperatur größer ist als die Temperaturvorgabe, wobei insbesondere vorgesehen sein muss, dass die Außentemperatur um mehr als ein bestimmtes Maß von der Temperaturvorgabe nach oben abweicht. Das Kühlen des Fahrzeuginnenraums ist dann nicht bzw. nur in geringem Maße erforderlich, wenn die Temperaturvorgabe festlegt, dass eine unterhalb oder zumindest nicht wesentlich oberhalb der Außentemperatur liegende Innenraumtemperatur erzeugt werden soll. Nur wenn dies nicht der Fall ist, ist es erforderlich, im Fahrzeugstillstand und bei einer Unterbrechung des Betriebs der Brennkraftmaschine das Kühlen weiter vorzunehmen. Auf ein Trocknen der in den Fahrzeuginnenraum strömenden Luft während des Stillstands des Fahrzeugs kann gegebenenfalls auch verzichtet werden, wenn die Innen- und Außentemperatur einander wenigstens annähernd gleich sind oder die Fahrzeuginnentemperatur höher ist als die Außentemperatur. In dem Fall ist es nicht erforderlich, dass die Luft im Bereich des Verdampfers gekühlt wird und auch ein Ansteigen der Temperatur im Verdampfer auf Werte über die Taupunkttemperatur ist nicht zu erwarten. In diesem Zusammenhang ist es dann nicht erforderlich, dass im Verdampfer eine wesentlich niedrigere Temperatur vorgehalten wird.

Gemäß vorteilhafter Ausgestaltung der Erfindung ist vorgesehen, dass ein Unterbrechen des Betriebs der Brennkraftmaschine unterdrückt wird, soweit nicht ein Mindestladezustand des Kältespeichers erreicht ist. Durch dieses Priorisieren der Kühlfunktion gegenüber der Kraftstoffeinsparung durch das Unterbrechen des Betriebs der Brennkraftmaschine im Fahrzeugstillstand wird gewährleistet, dass dann, wenn die Speicherbeladung noch nicht ausreichend oder aber eine zu starke Entladung des Speichers erfolgt ist, das weitere Kühlen der zuströmenden Luft und das Aufrechterhalten einer angenehmen Fahrzeuginnenraumtemperatur Vorrang vor der Kraftstoffersparnis durch das Unterbrechen des Betriebs der Brennkraftmaschine genießt. In diesem Fall wird die Brennkraftmaschine auch im Fahrzeugstillstand weiterbetrieben, so dass ausreichend Leistung zum Betreiben des Kompressors der Klimaanlage und somit auch zum Erzeugen ausreichender Kälte im Bereich des Verdampfers gewahrt bleibt. Es kann dabei insbesondere ein weiteres Beladen des Kältespeichers erfolgen, so dass bei anhaltendem Fahrzeugstillstand nach einem gewissen Zeitraum der Mindestladezustand des Kältespeichers noch erreicht wird und somit ein Unterbrechen des Betriebs der Brennkraftmaschine ab diesem Zeitpunkt ermöglicht wird.

Es entspricht einer weiterführenden Ausgestaltung, wenn der Mindestladezustand des Kältespeichers durch eine Mindestladedauer oder Höchsttemperatur im Kältespeicher vorgegeben ist. Die im Kältespeicher gespeicherte thermische Energie ist durch die vorherrschende Temperatur im Kältespeicher gegeben, wobei diese solange auf einem gleichen Niveau verharrt, wie ein teilweiser Phasenübergang des Speichermediums stattfindet. Es kann somit beispielsweise als Maß für das Beladen des Kältespeichers herangezogen werden, wenn diese Phasenübergangstemperatur unterschritten wird. In diesem Fall ist das gesamte Speichermedium vom flüssigen in den festen Zustand übergegangen und die durch das Volumen und die Phasenübergangsenergie festgelegte Speicherenergiemenge steht vollständig zur Verfügung. Ein weiteres Beladen des Kältespeichers hat nur ein Absenken der Temperatur des Speichermediums im Kältespeicher zur Folge, welche Energie gegenüber der Phasenumwandlungsenergie wesentlich geringer ist.

Ein anderes Maß für den Ladezustand des Kältespeichers kann die Ladedauer und hier insbesondere das Erreichen einer Mindestladedauer sein. Die Ladedauer ermöglicht es abzuschätzen, wie hoch die gespeicherte Energiemenge ist, wodurch auch abgeschätzt werden kann, für wie lange der Betrieb der Klimatisierungseinrichtung ohne den Kompressor rein aufgrund der Energie des Kältespeichers möglich ist. Die Vorgabe eines Mindestladezustands stellt sicher, dass zumindest für vorzugsweise eine geringe Anzahl, insbesondere beispielsweise für 1 bis 10 Unterbrechungen des Betriebs der Brennkraftmaschine jeweils von einer bestimmten, zu erwartender Zeitdauer (beispielsweise im Bereich von bis zu 2 Minuten für den Stopp vor einer Ampel) aus dem Ladezustand des Kältespeichers heraus das weitere Kühlen möglich ist.

Hierzu ist gemäß vorteilhafter Ausgestaltung der Erfindung insbesondere vorgesehen, dass der Mindestladezustand in Abhängigkeit von wenigstens einer der Größen aus Außentemperatur, Differenz von Außentemperatur zu Temperaturvorgabe sowie der Sonneneinstrahlung erfolgt. Diese drei Größen sind insbesondere maßgeblich dafür, welche Energie pro Zeiteinheit für den Betrieb des Verdampfers und das Aufrechterhalten eines konstanten Temperaturniveaus im Bereich des Verdampfers erforderlich ist. Je größer die Außentemperatur und je größer die Sonneneinstrahlung, desto größer ist die vom Verdampfer aufzubringende Kühlleistung. Diese Kühlleistung ist aber auch von der Differenz von der Außentemperatur zu Temperaturvorgabe durch die Fahrzeuginsassen abhängig. Diese Größen in Kombination zueinander oder alleine für sich genommen ermöglichen die Bestimmung eines Maßes für die zu erwartende Kälteleistung, die im Kältespeicher bereitgestellt werden muss, um eine bestimmte Zeitdauer ohne Betrieb der Brennkraftmaschine überbrücken zu können. Aufgrund dieser erforderlichen Energie ist dann auch ein angemessener Mindestladezustand des Kältespeichers definierbar. Dabei ist es letztendlich eine Auslegungsfrage der Größe des Kältespeichers und somit seiner thermischen Kapazität, welche Ansprüche an die Beladung gestellt werden können und welche Energiemengen in ihm bevorratet werden können. Genauso verhält es sich bei den Teilladungszuständen, der erforderliche Mindestladezustand kann entsprechend den Bedürfnissen und der Auslegung des Fahrzeugs festgelegt werden.

Es entspricht dabei einer vorteilhaften Ausgestaltung der Erfindung, wenn das Beladen des Kältespeichers in Abhängigkeit wenigstens einer der Größen aus Innenraumtemperatur, Außentemperatur, Luftfeuchtigkeit und Sonneneinstrahlung erfolgt. Die Art der Beladung, beispielsweise die Temperatur, mit welcher der Verdampfer betrieben wird um das Beladen durchzuführen, bestimmt, wie hoch die Energie ist, welche vom Kompressor zu liefern ist und andererseits auch die Energie, welche in einer bestimmten Zeiteinheit im Kältespeicher bevorratet wird. Die zu bevorratende Energiemenge steigt mit höherer Temperaturdifferenz zwischen Innenraumtemperatur und Außentemperatur bzw. Temperaturvorgabe und Außentemperatur, ist auch abhängig von der Luftfeuchtigkeit und der Sonneneinstrahlung. So kann es bei geringerer Temperaturdifferenz zwischen Innenraumtemperatur und Außentemperatur und bei geringer Sonneneinstrahlung ausreichend sein, den Kältespeicher mit geringerer Kälteleistung zu beladen und dennoch beispielsweise einen vorgegebenen Mindestladezustand zu erreichen, bevor die nächste Unterbrechung des Betriebs der Brennkraftmaschine erfolgt. Andererseits ist bei ungünstigen Bedingungen eine hohe Leistungserfordernis für den Bereich des Kältespeichers gegeben, so dass eine raschere, energieintensivere Beladung notwendig sein kann, um in der zu erwartenden zur Verfügung stehenden Zeit zwischen zwei Unterbrechungen des Betriebs der Brennkraftmaschine eine hinreichende Beladung des Kältespeichers wenigstens für das Kühlen während der nächsten zu erwartenden Unterbrechung zu erreichen. In Abhängigkeit der gegebenen Parameter und einer gewünschten Auslegung des Fahrzeugs ist dann zu bestimmen, in welcher Weise das Beladen des Kältespeichers erfolgt und insbesondere mit welcher Temperatur der Verdampfer betrieben wird um den Kältespeicher zu beladen. Dies steuert auch das Erfordernis des zusätzlichen Energiebedarfs im Bereich der Brennkraftmaschine zum Antreiben des Kompressors der Klimatisierungseinrichtung.

Gemäß einer vorteilhaften Ausgestaltung der Erfindung ist vorgesehen, dass das Beladen des Kältespeichers derart erfolgt, dass die Temperatur am Verdampferaustritt auf ein Minimum reduziert wird. Es wird insbesondere auf ein Temperaturniveau im Bereich des Gefrierpunkts von Wasser bzw. knapp oberhalb davon zurückgegriffen. Bevorzugt liegt die Beladungstemperatur des Kältespeichers im Bereich von 0 bis 5 °C.

Wird ein Kältespeicher verwendet, bei dem ein Medium einen Phasenübergang ausführt, so muss die Temperatur der Beladung selbstverständlich unterhalb der Phasenübergangstemperatur des Kältemediums im Kältespeicher liegen. Je niedriger die Temperatur beim Beladen des Kältespeichers ist, desto höher ist die thermische Kapazität des Kältespeichers, welche anschließend zum Durchführen des Kühlens während einer Unterbrechung des Betriebs der Brennkraftmaschine zur Verfügung steht. Andererseits ist bei niederer Temperatur beim Beladen auch die Zeitdauer für das Durchführen eines Beladevorgangs geringer, allerdings ist die in diesem Zeitraum benötigte Leistung des Kompressors der Klimatisierungseinrichtung höher.

Es entspricht einer vorteilhaften Ausgestaltung der Erfindung, wenn für die Zeit des Beladens des Kältespeichers die Verdampfertemperatur, die beispielsweise gleitend die Werte zwischen 2 °C und 12 °C annehmen kann, auf den Minimalwert oder kurzzeitig auch auf noch niedrigere Werte reduziert wird. In diesem Fall muss die in den Fahrzeuginnenraum einströmende Luft in stärkerem Maße wiederaufgeheizt werden um die gewünschte Solltemperatur im Innenraum beizubehalten (Wiederaufheiz- oder Reheatbetrieb) und für gleich bleibenden Komfort zu sorgen. Durch diese Maßnahme wird die Kältespeicherkapazität zum Kühlen, die während einer Unterbrechung des Betriebs der Brennkraftmaschine zur Verfügung steht, signifikant erhöht.

Ein Verfahren zum Betreiben einer Klimatisierungseinrichtung für Fahrzeuge mit einer Brennkraftmaschine und einer Einrichtung zum Unterbrechen des Betriebs der Brennkraftmaschine im Fahrzeugstillstand für die Dauer des Fahrzeugstillstands sieht vor, dass im Betrieb des Fahrzeugs das Aufladen wenigstens eines Kältespeichers erfolgt. Während einer Unterbrechung des Betriebs der Brennkraftmaschine kann ein Kühlen des Fahrzeuginnenraums unter Ausnutzung der im Kältespeicher gespeicherten Energie erfolgen. Es kann dabei insbesondere vorgesehen sein, dass das Beladen des Kältespeichers gemäß einem der vorher geschilderten Verfahren und Ausgestaltungen eines solchen Verfahrens erfolgt. Es stellt eine besonders vorteilhafte Ausgestaltung dar, wenn das Kühlen des Fahrzeuginnenraums bei einer Unterbrechung des Betriebs der Brennkraftmaschine nur dann erfolgt, wenn zugleich ein Fahrzeugstillstand und eine eingeschaltete Zündung des Fahrzeugs gegeben sind. Das Vorliegen des Fahrzeugstillstands ist an sich Voraussetzung für das Stattfinden eines Unterbrechens des Betriebs der Brennkraftmaschine. Gemäß der Ausgestaltung wird das Vorliegen einer Unterbrechung des Betriebs der Brennkraftmaschine von einer Außerbetriebnahme der Brennkraftmaschine dadurch festgestellt, dass ein Signal vorliegt, wonach die Zündung des Fahrzeugs eingeschaltet ist. Durch diese Maßnahme wird vermieden, dass der Kältespeicher dann entladen wird, wenn das Fahrzeug außer Betrieb genommen wurde und die Fahrzeuginsassen beispielsweise das Fahrzeug verlassen haben. In diesen Fällen ist ein längerer Halt und Stillstand des Fahrzeugs zu erwarten, so dass das Fortsetzen eines Kühlens des Fahrzeuginnenraums nicht erforderlich ist.

Gemäß weiterer vorteilhafter Ausgestaltungen der Erfindung ist vorgesehen, dass das Kühlen des Fahrzeugsinnenraums bei unterbrochenem Betrieb der Brennkraftmaschine nur erfolgt, wenn die Bordnetzspannung einen Spannungsgrenzwert übersteigt. Durch diese Maßnahme wird sichergestellt, dass für den Betrieb der Klimatisierungseinrichtung nicht eine Bordnetzspannung erreicht wird, durch die das Wiederinbetriebnehmen der Brennkraftmaschine oder das Weiterbetreiben anderer wichtiger und sicherheitsrelevanter Einrichtungen des Fahrzeugs verhindert wird. Insbesondere kann es beispielsweise notwendig sein, während des Fahrzeugstillstands gewisse Beleuchtungseinrichtungen des Fahrzeugs und manche andere elektrische Verbraucher weiterzubetreiben. Unterschreitet die Bordnetzspannung einen Spannungsgrenzwert wird darauf geschlossen, dass der Ladezustand der Batterie des Fahrzeugs nicht mehr ausreichend ist um das Gebläse und weitere Einrichtungen, die zur Durchführung der Klimatisierung während des Fahrzeugstillstands erforderlich sind, zu betreiben. In diesen Fällen wird das Weiterführen der Fahrzeuginnenraumklimatisierung zugunsten der Möglichkeit des Weiterbetreibens des Fahrzeugs nach dem Beendigen des Fahrzeugstillstandswunsches verhindert.

Gemäß einer weiteren vorteilhaften Ausgestaltung erfindungsgemäßer Verfahren ist vorgesehen, dass ein Kühlen des Fahrzeuginnenraums bei unterbrochenem Betrieb der Brennkraftmaschine im Umluftbetrieb erfolgt. Dadurch wird und ein leichteres Abkühlen und eine geringere Energieentnahme aus dem Kältespeicher zum Aufrechterhalten einer konstanten Innenraumtemperatur ermöglicht. Durch diese Maßnahme wird auch erreicht, dass die Temperatur der zu kühlenden Luft, nämlich die Innenluft, schon näher an der aufrecht zu erhaltenden Temperatur im Fahrzeuginnenraum liegt, als dies bei der wärmeren angesaugten Außenluft der Fall ist.

Gemäß vorteilhafter Ausgestaltung erfindungsgemäßer Verfahren ist vorgesehen, dass beim Kühlen des Fahrzeuginnenraums bei unterbrochenem Betrieb der Brennkraftmaschine der Luftmassenstrom über den Verdampfer und/oder den Kältespeicher minimiert wird. Durch diese Maßnahme wird die Energieentnahme zum Aufrechterhalten der erwünschten Fahrzeuginnenraumtemperatur möglichst gering gehalten. Der minimale Luftmassenstrom ergibt sich dabei aus dem Kühlungsbedürfnis für den Fahrzeuginnenraum und dem Bedürfnis der Zufuhr an Frischluft in den Fahrzeuginnenraum, beispielsweise kann aber bei einem aufgeheizten Fahrzeuginnenraum und einer somit großen Temperaturdifferenz zwischen Fahrzeuginnentemperatur und Temperaturvorgabe die Kühlleistung auf ein bestimmtes Maximum reduziert werden um ein kontinuierliches weiteres Abkühlen mit geringerer Geschwindigkeit während der Unterbrechung des Betriebs der Brennkraftmaschine aufrechtzuerhalten, andererseits aber auch genügend Energie im Kältespeicher zur Verfügung zu haben um ein Kühlen über die ganze Zeit der Unterbrechung des Betriebs der Brennkraftmaschine hinweg zur Verfügung zu haben. Der Luftmassenstrom über den Verdampfer wird demgemäß entsprechend vorteilhafter Ausgestaltung in Abhängigkeit wenigstens einer der Größen aus Außentemperatur, Sonneneinstrahlung und Temperaturdifferenz zwischen Außentemperatur und Innenraumtemperatur bestimmt. Er kann insbesondere in Form von Sollgrößen, Kennlinien und dergleichen vörgegeben sein. Die Vorgabe des Luftmassenstroms in Abhängigkeit wenigstens einer dieser Größen ist eine Frage der Dimensionierung der Leistung der gesamten Klimatisierungseinrichtung und kann entsprechend den Bedürfnissen und Wünschen bestimmt werden. Besonders in den Fällen, bei denen der Verdampfer selbst als Kältespeicher genutzt wird, wie es beispielsweise der Fall ist, wenn ein Teil der Verdampfers im Normalbetrieb und bei Betrieb der Brennkraftmaschine nicht zur Kühlung des Luftmassenstroms der angesaugten Luft beiträgt oder aber wenn im Bereich des Verdampfers Speicherelemente für Kälte vorgesehen sind, kann aufgrund nur begrenzter Kälteleistung solcher Speichereinrichtungen das Minimieren des Luftmassenstroms über den Verdampfer bzw. den heruntergekühlten Bereich des Verdampfers von Vorteil sein.

Es entspricht dabei vorteilhafter weiterführender Ausgestaltung der Erfindung, wenn der Betrieb des Gebläses der Klimatisierungseinrichtung, welche den Luftmassenstrom im Bereich der Klimatisierungseinrichtung bestimmt, während des Entladens des Kältespeichers in Abhängigkeit einer Entladekennlinie für den Kältespeicher erfolgt. Durch diese Maßnahme wird sichergestellt, dass das Entladen des Kältespeichers in Abhängigkeit seines Ladezustands erfolgt und bei sehr hohem Ladezustand auch eine größere Kälteleistung des Kältespeichers abrufbar ist, als dies bei prekärem Ladezustand des Kältespeichers der Fall ist. Dabei ist die Entladekennlinie gemäß vorteilhafter Ausgestaltung der Erfindung insbesondere in Abhängigkeit wenigstens einer der Größen aus Außentemperatur, Sonneneinstrahlung, Verdampferausblastemperatur und Innenraumtemperatur vorgegeben. Die Entladekennlinie ist dabei insbesondere durch die Gegebenheiten und konstruktiven Merkmale des Fahrzeugs und durch die herrschenden Temperaturverhältnisse sowie die erfolgende Sonneneinstrahlung bestimmt. Durch das Anpassen der Entladekennlinie, beispielsweise in Form der Vorgabe eines Kennfelds in Abhängigkeit wenigstens eines Teils der vorgenannten Größen, kann sichergestellt werden, dass das Entladen des Kältespeichers in einer Form stattfindet, die dem Ladezustand des Kältespeichers angemessen ist und die andererseits auch dem Bedarf an Kühlleistung für den Fahrzeuginnenraum angepasst ist.

Es ist gemäß vorteilhafter Ausgestaltung erfindungsgemäßer Verfahren vorgesehen, dass die Luftzufuhr und Luftverteilung der Luft zu den Luftaustrittsdüsen im Sinne des Erzeugens maximaler Wirkung im Körperbereich der Fahrzeuginsassen gesteuert ist. Durch Steuern der Richtung der Luftzufuhr, beispielsweise der Luftverteilung im Kopfbereich, Körperbereich und Fußbereich für die Fahrzeuginsassen, ist das Wärmeempfinden der Fahrzeuginsassen steuerbar. Insbesondere durch relativ hohe Strömungstemperaturen der Luft im Kopf- und Körperbereich und eine relativ niedere Temperatur in diesen Bereichen, kann ein geringerer Wärmeeindruck vermittelt werden, als dies durch Kühlen des Fußbereichs der Fall sein kann. Somit kann durch entsprechende Luftverteilung in Abhängigkeit auch der Temperaturverhältnisse und der Strömungsgeschwindigkeiten der Luft, welche durch die unterschiedlichen Luftaustrittsdüsen ermöglicht wird, eine Luftleitung und Luftverteilung geschaffen werden, die den Fahrzeuginsassen dem subjektiven Eindruck entsprechend eine möglichst große Kühlwirkung bei kleiner Kühlleistung vermittelt.

Es entspricht vorteilhafter Ausgestaltung erfindungsgemäßer Verfahren, wenn ein Unterdrücken der Unterbrechung des Betriebs der Brennkraftmaschine erfolgt, wenn die erzielbare Kühlleistung in unterbrochenem Betriebszustand der Brennkraftmaschine eine Mindestgröße unterschreitet. Durch diese Maßnahme, welche auch das Wiederinbetriebnehmen der Brennkraftmaschine im Fahrzeugstillstand umfassen kann, wenn die zur Verfügung stehende Kühlleistung durch den Kältespeicher nicht mehr ausreicht, wird sichergestellt, dass das Aufrechterhalten angenehmer Fahrzeuginnenraumtemperaturen auch dann ermöglicht wird, wenn dies mit den Mitteln des Kältespeichers nicht oder nicht mehr möglich ist.

Dabei kann als Maß für die zur Verfügung stehende erzielbare Kühlleistung insbesondere das Überschreiten einer Mindestladedauer des Kältespeichers vor Beginn der Unterbrechung des Betriebs der Brennkraftmaschine herangezogen werden. Durch diese Maßnahme wird sichergestellt, dass die Beladung des Kältespeichers eine Mindestgröße überschreitet, so dass für eine zu erwartende Zeitdauer der Unterbrechung des Betriebs der Brennkraftmaschine eine hinreichende Kühlleistung zum Weiterbetreiben der Klimatisierungseinrichtung und zum Aufrechterhalten einer erwünschten und angenehmen Fahrzeuginnenraumtemperatur zur Verfügung steht. Dabei kann es von besonders vorteilhafter Ausgestaltung sein, wenn die Mindestgröße für die Beladung des Kältespeichers in Abhängigkeit wenigstens einer der Größen aus Außentemperatur, Sonneneinstrahlung und Temperaturdifferenz zwischen Außentemperatur und Innenraumtemperatur und/oder Temperaturvorgabe bestimmt wird. Insbesondere ist es von diesen Größen abhängig, wie hoch die erforderliche Kühlleistung für einen zu erwartenden Zeitraum der Entladung des Kältespeichers während einer Unterbrechung des Betriebs der Brennkraftmaschine ist und somit für ein Entladen des Kältespeichers bereitzustellen ist. Die Anforderung an die zur Verfügung stehende Energie des Kältespeichers wird durch diese Größen wesentlich bestimmt, so dass durch Vorgabe einer entsprechend zu ermittelnden Mindestgröße für die Beladung des Kältespeichers sichergestellt werden kann, dass über einen gewissen Zeitraum hinweg die erforderliche Kühlleistung aufbringbar ist.

Für ein Verfahren zum Betreiben einer Klimatisierungseinrichtung für Fahrzeuge, die eine Brennkraftmaschine zum Betreiben des Fahrzeugs und eine Einrichtung zum Unterbrechen des Betriebs der Brennkraftmaschine im Fahrzeugstillstand für die Dauer des Fahrzeugstillstands aufweisen, ist vorgesehen, dass im Betrieb des Fahrzeugs das Aufladen wenigstens eines Kältespeichers erfolgt und während einer Unterbrechung des Betriebs der Brennkraftmaschine ein Kühlen des Fahrzeuginnenraums unter Ausnutzung der im Kältespeicher gespeicherten Energie erfolgen kann. Dabei dann das Beladen und Entladen des Kältespeichers insbesondere nach einem der vorstehend geschilderten Vorgehensweisen erfolgen. Gemäß erfindungsgemäßer Ausgestaltung ist darüber hinaus für das Beheizen des Fahrzeuginnenraums bei unterbrochenem Betrieb der Brennkraftmaschine ein Wärmespeicher vorgesehen, wobei ein Beladen des Wärmespeichers in Abhängigkeit von Betriebszuständen des Fahrzeugs erfolgt.

Durch diese Ausgestaltung wird es ermöglicht, nicht nur das Kühlen des Fahrzeuginnenraums, sondern auch ein Beheizen des Fahrzeuginnenraums im Fahrzeugstillstand bei unterbrochenem Betrieb der Brennkraftmaschine aufrechtzuerhalten. Dabei erfolgt das Beladen des Wärmespeichers in für den Verbrauch der Brennkraftmaschine energetisch günstiger Weise ein Beladen des Wärmespeichers in Abhängigkeit von Betriebszuständen des Fahrzeugs. Hierdurch wird ermöglicht das Beladen nur dann durchzuführen, wenn abzusehen ist, dass das Zurverfügungstellen von Energie durch den Wärmespeicher erforderlich wird.

Erfindungsgemäß ist vorgesehen, dass als Betriebszustand eine die Wahrscheinlichkeit des Auftretens einer Unterbrechung des Betriebs der Brennkraftmaschine repräsentierende Größe herangezogen wird. Dies kann insbesondere die Fahrzeuggeschwindigkeit sein. Es ist dabei insbesondere vorgesehen, dass das Beladen des Wärmespeichers nur dann erfolgt, wenn die Fahrzeuggeschwindigkeit kleiner ist als eine Grenzgeschwindigkeit. Die Grenzgeschwindigkeit ist dabei vorzugsweise größer als die im Stadtverkehr gefahrenen Geschwindigkeiten gewählt und liegt insbesondere im Bereich von 60 bis 80 km/h und vorzugsweise um 70 km/h.

Durch diese Maßnahme erfolgt ein Beladen des Wärmespeichers nur dann, wenn zu erwarten ist, dass ein Fahrzeugstillstand und damit ein Unterbrechen des Betriebs der Brennkraftmaschine erfolgen wird. Das Beladen eines Wärmespeichers kann insofern energetisch ungünstig sein, als dass zum Erzeugen eines hohen Grades an Abwärme durch die Brennkraftmaschine diese in einer Art und Weise betrieben wird, dass mehr Energie verbraucht wird, als zum Erzeugen der gleichen Antriebsleistung unbedingt erforderlich wäre, wobei durch den Verbrennungsvorgang dann ein stärkeres Erwärmen des Kühlmittels der Brennkraftmaschine erfolgt, wobei die Wärmeenergie im Kühlmittel dann zum Beladen des Wärmespeichers und zum Beheizen des Fahrzeuginnenraums dienen kann.

Es entspricht vorteilhafter Ausgestaltung der Erfindung, wenn das Beladen des Wärmespeichers in Abhängigkeit der Temperaturvorgabe für den Innenraum des Fahrzeugs nur dann erfolgt, wenn die Außentemperatur kleiner ist als die Temperaturvorgabe für den Innenraum. Es kann insbesondere vorgesehen sein, dass das Beladen des Wärmespeichers nur dann erfolgt, wenn die Außentemperatur um mehr als ein bestimmtes Maß von der Temperaturvorgabe nach unten abweicht. Durch diese Maßnahme wird sichergestellt, dass das Beladen des Wärmespeichers nur erfolgt, wenn bei unterbrochenem Betrieb der Brennkraftmaschine ein Beheizen des Innenraums aus dem Wärmespeicher erforderlich ist.

Gemäß vorteilhafter weiterführender Ausgestaltung ist vorgesehen, dass das Unterbrechen des Betriebs der Brennkraftmaschine unterdrückt wird, soweit nicht ein Mindestladezustand des Wärmespeichers erreicht ist. Der Mindestladezustand ist dabei vorzugsweise durch eine Mindestladedauer und/oder durch eine Mindesttemperatur im Wärmespeicher gegeben. Der Mindestladezustand ist dabei vorzugsweise in Abhängigkeit wenigstens einer der Größen aus Außentemperatur, Sonneneinstrahlung und Differenz von Außentemperatur zu Temperaturvorgabe bestimmt. Durch diese Maßnahmen kann in vorteilhafter Weise sichergestellt werden, dass für die zu erwartende Zeit der Unterbrechung des Betriebs der Brennkraftmaschine eine hinreichende Wärmeleistung im Wärmespeicher gespeichert ist und somit ein angemessenes Beheizen des Fahrzeugsinnenraums über die Dauer des Unterbrechens des Betriebs der Brennkraftmaschine hinweg ermöglicht ist.

Gemäß vorteilhafter Ausgestaltung der Erfindung ist vorgesehen, dass für die Dauer des Beladens des Wärmespeicher die Temperatur des Kühlmediums der Brennkraftmaschine auf einen oberen Grenzwert angehoben wird. Durch diese Maßnahme wird ein möglichst rasches großes Beladen des Wärmespeicher ermöglicht. Der obere Grenzwert der Temperatur des Kühlmediums der Brennkraftmaschine kann dabei insbesondere an dem oberen Grenzbereich der normalen Betriebstemperatur der Brennkraftmaschine gewählt sein. Insbesondere bei Wärmespeichern, die aufgrund eines Phasenübergangs eines Wärmespeichermediums Energie speichern, kann der Phasenübergangsbereich des Mediums so gewählt sein, dass dieser oberhalb der normalen Betriebstemperaturen des Kühlmittels liegt, um damit sicherzustellen, dass ein Beladen nur dann erfolgt, wenn dies erwünscht ist. Andererseits erhöht eine hohe Temperatur dieses Phasenübergangs auch die thermische Kapazität des Wärmespeichers. Unterschiedliche Arten von Wärmespeichern für derartige Einrichtungen sind aus dem Stand der Technik bekannt.

Gemäß einem Verfahren zum Betreiben einer Klimatisierungseinrichtung für Fahrzeuge ist vorgesehen, dass das Fahrzeug eine Brennkraftmaschine zum Betreiben des Fahrzeugs und eine Einrichtung zum Unterbrechen des Betriebes der Brennkraftmaschine im Fahrzeugstillstand für die Dauer des Fahrzeugstillstandes aufweist. Dabei erfolgt im Betrieb des Fahrzeugs das Aufladen wenigstens eines Kältespeichers und während einer Unterbrechung des Betriebs der Brennkraftmaschine kann ein Kühlen des Fahrzeuginnenraums unter Ausnutzen der im Kältespeicher gespeicherten Energie vorgenommen werden. Dies kann insbesondere mit einem der vorstehend beschriebenen Verfahren zum Beladen eines Wärmespeichers erfolgen. Gemäß vorteilhafter Ausgestaltung ist vorgesehen, dass ein Beheizen des Fahrzeuginnenraums mittels der Energie eines Wärmespeichers bei unterbrochenem Betrieb der Brennkraftmaschine nur erfolgt, wenn Fahrzeugstillstand und eingeschaltete Zündung des Fahrzeugs gegeben sind. Durch diese Maßnahme wird sichergestellt, dass ein Entladen des Wärmespeichers nur erfolgt, wenn tatsächlich eine Unterbrechung des Betriebs der Brennkraftmaschine und nicht eine Außerbetriebnahme des Fahrzeugs im Sinne des Abstellens des Fahrzeugs und des Ausschaltens der Zündung vorliegt.

Es entspricht weiterer vorteilhafter Ausgestaltung, wenn ein Beheizen des Fahrzeugsinnenraums bei unterbrochenem Betrieb der Brennkraftmaschine nur erfolgt, wenn die Bordnetzspannung einen Spannungsgrenzwert übersteigt. Durch diese Maßnahme ist sichergestellt, dass eine Wiederinbetriebnahme der Brennkraftmaschine und das Betreiben sicherheitsrelevanter Einrichtung während des Unterbrechens des Betriebs der Brennkraftmaschine nicht zu Lasten des Aufrechterhaltens des Beheizens des Fahrzeuginnenraums vorgenommen werden.

Es entspricht weiterer vorteilhafter Ausgestaltung der Erfindung, wenn das Beheizen des Fahrzeuginnenraums bei unterbrochenem Betrieb der Brennkraftmaschine im Umluft- oder Teilumluftbetrieb erfolgt. Durch diese Maßnahme wird die Energienentnahme aus dem Wärmespeicher verringert. Darüber hinaus entspricht es vorteilhafter Vorgehensweise, wenn das Beheizen des Fahrzeuginnenraums bei unterbrochenem Betrieb der Brennkraftmaschine so erfolgt, dass der Luftmassenstrom über den Heizungswärmetauscher und/oder Wärmespeicher minimiert wird. Durch diese Vorgehensweise wird sichergestellt, dass pro Zeiteinheit eine möglichst geringe Energiemenge dem Wärmespeicher entnommen wird. Dabei ist es unerheblich, ob die Energie vom Wärmespeicher direkt an den Luftmassenstrom abgegeben wird, oder ob der Wärmetauscher zum Erwärmen des üblichen Heizungswärmetauschers, beispielsweise mittels eines Sekundärkreislaufs benutzt wird. Dabei kann insbesondere vorgesehen sein, dass der Luftmassenstrom in Abhängigkeit wenigstens einer der Größen aus Außentemperatur, Differenz zwischen Außentemperatur und Temperaturvorgabe sowie Sonneneinstrahlung bestimmt wird. Dabei kann insbesondere vorgesehen sein, dass der Betrieb des Gebläses der Klimatisierungseinrichtung in Abhängigkeit einer Entladekennlinie des Wärmespeichers erfolgt. Die Entladekennlinie ist dabei vorzugsweise in Abhängigkeit einer der Größen aus Außentemperatur, Sonneneinstrahlung und Wärmetauscherausblastemperatur und Innenraumtemperatur vorgegeben. Die Entladekennlinie und die Vorgabe des Betriebs des Gebläses entsprechend der Entladekennlinie dient einer optimalen Ausnutzung der vorhandenen Wärmeenergie des Wärmespeichers.

Es entspricht einer vorteilhaften Ausgestaltung der Erfindung, wenn die Luftführung und Luftverteilung der Luft zu den Luftaustrittsdüsen in der Klimatisierungseinrichtung im Sinne des Erzeugens maximaler Wärmewirkung im Körperbereich der Fahrzeuginsassen gesteuert ist. Es wird hierdurch insbesondere erreicht, dass mit minimalem Energieaufwand an gespeicherter Energie eine möglichst hohe Wärmewirkung und ein angenehmes Temperaturempfinden bei den Fahrzeuginsassen erzeugt wird. Es kann dabei insbesondere vorgesehen sein, eine vorgegebene Temperaturschichtung im Fahrzeuginnenraum aufrecht zu erhalten, wobei insbesondere eine warme Temperatur im Fuß- und Körperbereich des Fahrzeuginnenraums von größerer Bedeutung sein kann.

Gemäß vorteilhafter Ausgestaltung ist vorgesehen, dass ein Unterdrücken des Unterbrechens des Betriebs der Brennkraftmaschine erfolgt, soweit die erzielbare Heizleistung im unterbrochenen Zustand der Brennkraftmaschine nicht eine Mindestgröße übersteigt, wobei die Mindestgröße vorzugsweise durch eine Mindestladedauer und/oder Mindesttemperatur im Wärmespeicher vorgegeben ist. Der Mindestladezustand ist dabei insbesondere in Abhängigkeit wenigstens einer der Größen aus Außentemperatur, Sonneneinstrahlung und Differenz von Außentemperatur zu Temperaturvorgabe vorgegeben. Durch diese Maßnahme soll erreicht werden, dass das Beheizen des Fahrzeugs in jedem Fall in angemessener Weise erfolgt und dann, wenn nicht eine ausreichende Energiemenge zum Beheizen des Fahrzeuginnenraums durch den Wärmespeicher zur Verfügung steht oder nicht zu erwarten ist, dass für eine bestimmte zu erwartende Zeitdauer der Unterbrechung des Betriebs der Brennkraftmaschine ein Beheizen in angemessener Weise nicht erfolgen kann, die Brennkraftmaschine weiter betrieben wird. Durch diese Maßnahme wird das Aufrechterhalten angenehmer Temperaturen im Fahrzeuginnenraum auch dann gewährleistet, wenn ein entsprechendes Beheizen über den Wärmespeicher selber nicht möglich ist.

Im Übrigen ist die Erfindung nachfolgend auch anhand des in der Zeichnung dargestellten Ausführungsbeispiels näher erläutert; dabei zeigen:
- Figuren 1 bis 5: das Blockdiagramm eines erfindungsgemäßen Verfahrens zum Betreiben einer Klimatisierungseinrichtung sowohl für das Kühlen als auch das Beheizen des Fahrzeugs; und
- Figur 6: in schematischer Blockdarstellung eine Klimatisierungs-einrichtung für Fahrzeuge, welche zum Durchführen erfindungsgemäßer Verfahren geeignet ist.

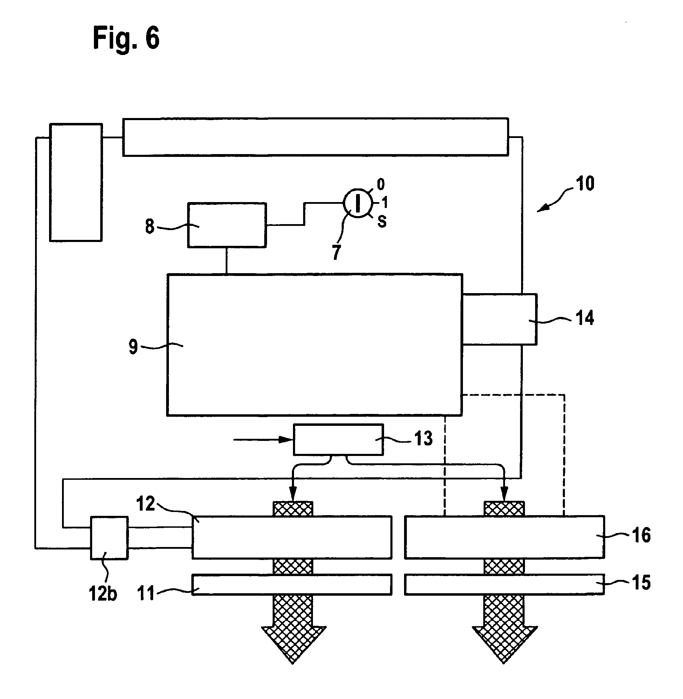

Die Figur 6 zeigt eine Klimatisierungseinrichtung 10 für ein Fahrzeug. Das Fahrzeug wird über die Brennkraftmaschine 9 angetrieben. Dabei wird der Betrieb der Brennkraftmaschine über ein Steuergerät gesteuert, welches eine Einrichtung 8 zum Unterbrechen des Betriebs der Brennkraftmaschine bei Stillstand des Fahrzeugs, gegebenenfalls noch unter weiteren einschränkenden Bedingungen, oder zu alternativen Zeitpunkten aufweist. Dabei weist das Fahrzeug darüber hinaus eine Zündung 7 auf, durch welche der Betrieb des Fahrzeugs dahingehend gesteuert wird, dass die Brennkraftmaschine außer Betrieb genommen, gezündet oder der Betrieb der Brennkraftmaschine aufrechterhalten werden kann (Zündung EIN). Die Klimatisierung des Fahrzeugs erfolg entweder durch Beheizen oder durch Kühlen des Fahrzeuginnenraums. Zum Kühlen des Fahrzeuginnenraums dient der Kältekreislauf, welcher als wesentliche Elemente den von der Brennkraftmaschine 9 angetriebenen Kompressor 14, den Verdampfer 12 und das dem Verdampfer vorgeschaltete Drosselventil 12b aufweist. Dem Verdampfer 12 zugeordnet ist der Kältespeicher 11, welcher mittels des Kältekreislaufs aufladbar ist. Zum Beheizen des Fahrzeugs dient der Heizungswärmetauscher 16, dem der Wärmespeicher 15 zugeordnet ist, wobei der Heizungswärmetauscher 16 mit Abwärme von der Brennkraftmaschine 9 betrieben wird und der Wärmespeicher 15 durch die Abwärme der Brennkraftmaschine aufladbar ist.
Der Luftmassenstrom von Luft zum Innenraum des Fahrzeugs wird durch ein Gebläse 13 erzeugt, wobei der Luftmassenstrom danach auf Verdampfer bzw. Kältespeicher 11 und/oder Heizungswärmetauscher 16 bzw. Wärmespeicher 15 aufgeteilt wird, um die Zufuhr eines entsprechend konditionierten Luftstromes in den Fahrzeuginnenraum zu erzeugen, wobei stromabwärts noch diverse Schaltklappen in den Luftführungskanälen vorgesehen sind, so dass der Luftstrom in unterschiedlicher Intensität durch verschiedene in unterschiedlichen Bereichen des Fahrzeuginnenraums angeordnete Luftaustrittsdüsen im Fahrzeuginnenraum verteilt werden kann. Durch geeignetes Mischen der Luftmassenströme über Verdampfer 12 bzw. Kältespeicher 11 und Heizungswärmetauscher 16 bzw. Wärmespeicher 15 kann ein vorgegebener Grad an Luftfeuchtigkeit und Lufttemperatur des Luftmassenstroms erzeugt werden, wobei durch unterschiedliche Mischungsgrade auch unterschiedliche Luftschichtungen im Fahrzeuginnenraum erzeugbar sind. Derartige Klimatisierungseinrichtungen sind auch allgemein aus Fahrzeugen bekannt.

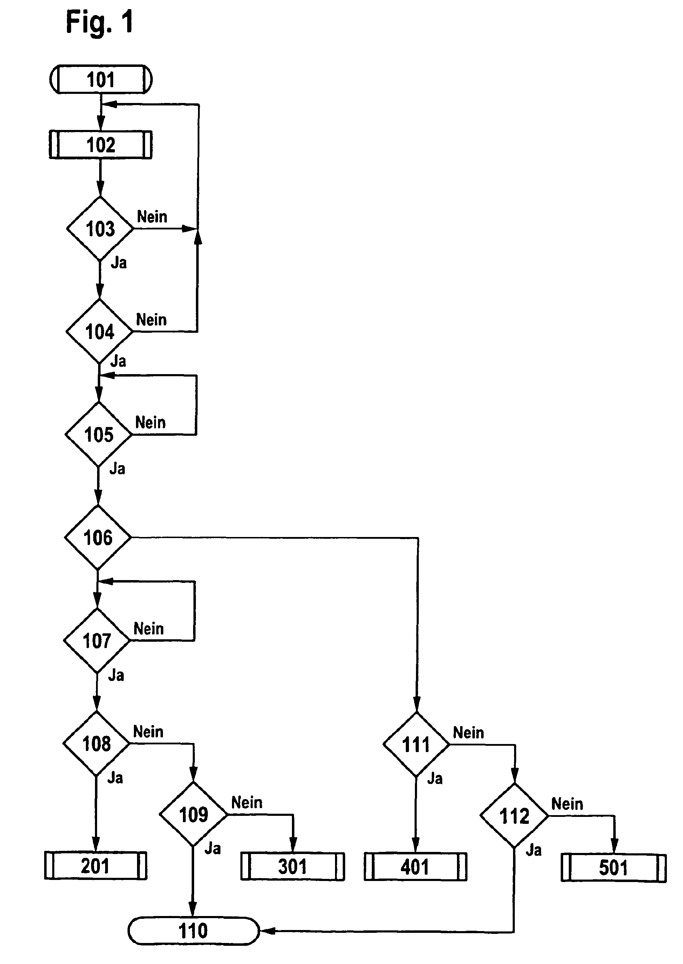

Die Figuren 1 bis 5 zeigen das Flussdiagram eines erfindungsgemäßen Verfahrens.

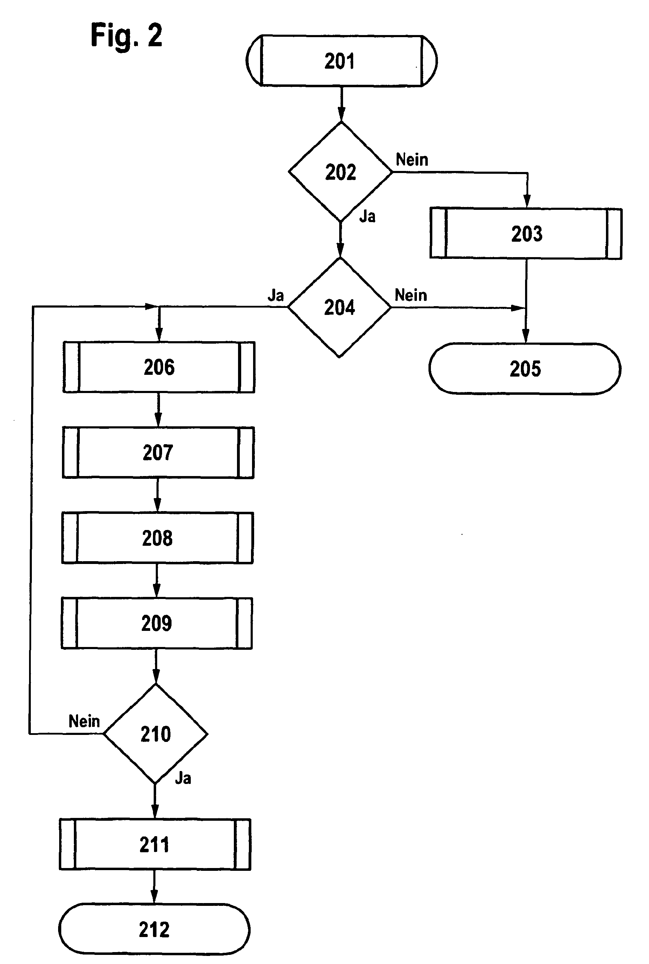

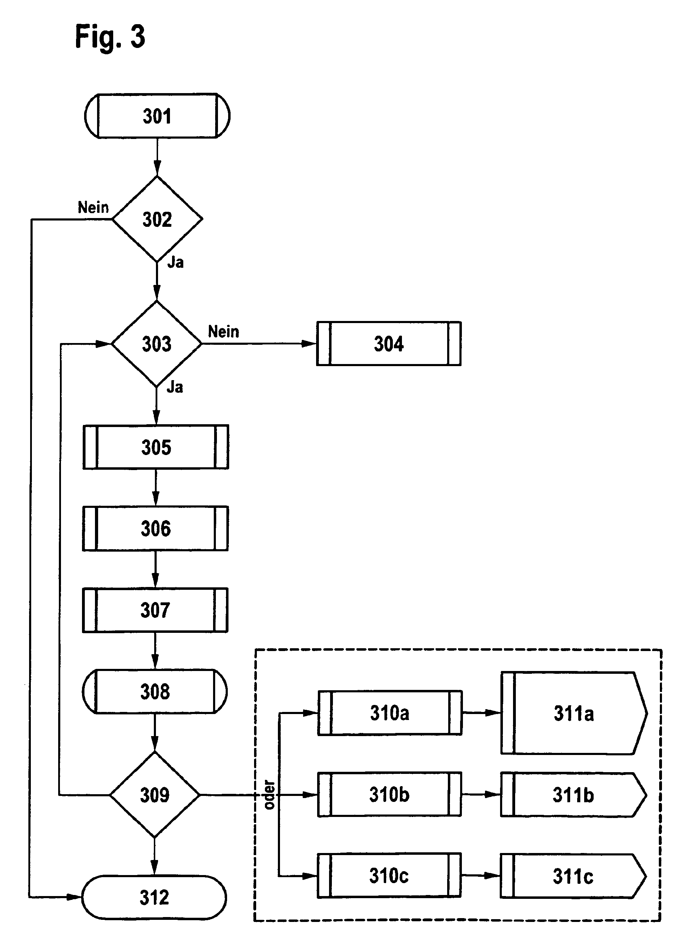

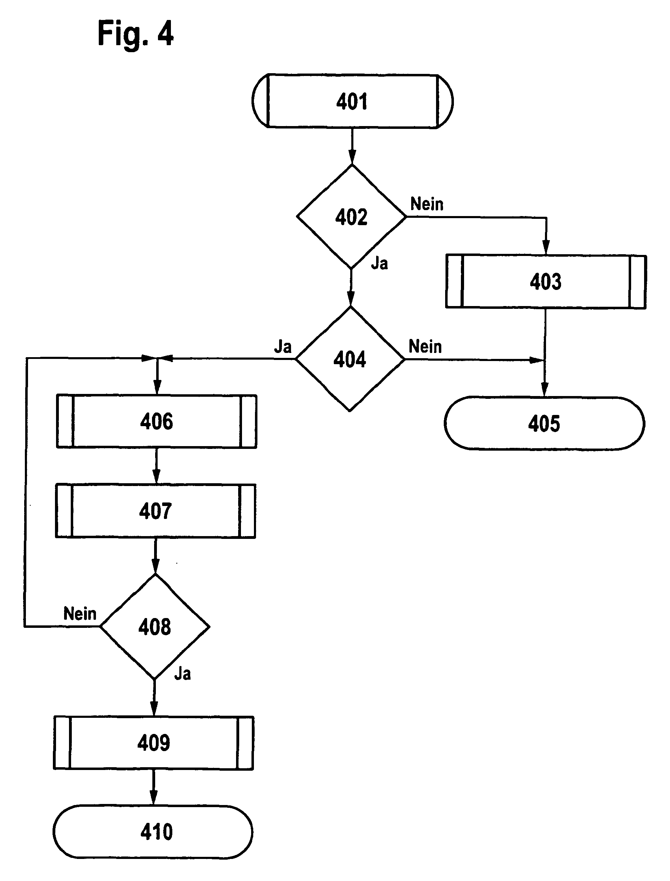

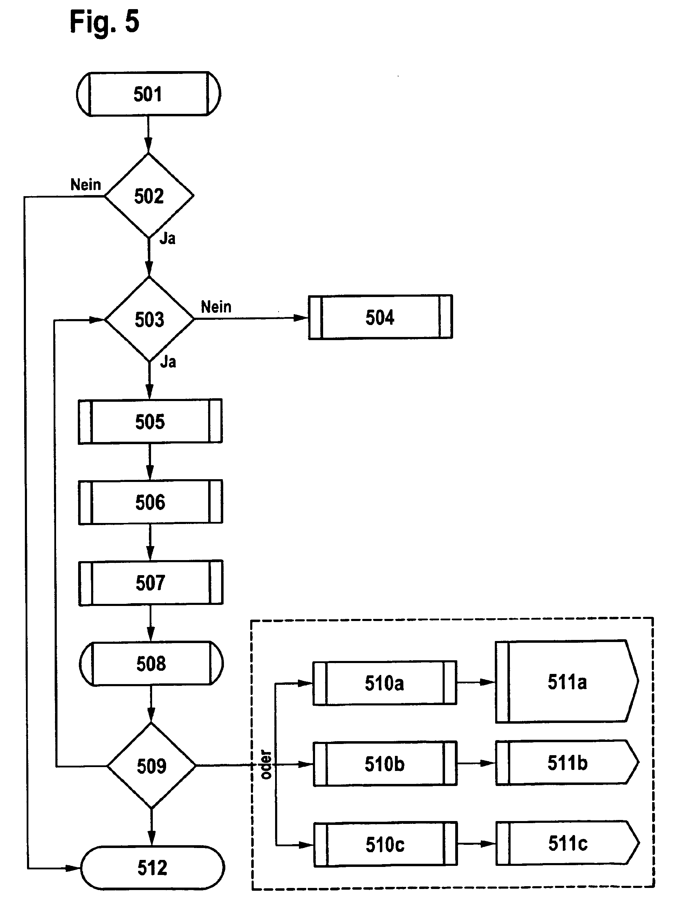

Dabei zeigt die Figur 1 das Blockdiagram eines übergeordneten Verfahrens, welches die aktuelle Fahrsituation und Betriebsbedingungen des Fahrzeugs sortiert und überprüft, welche der Fälle der Unterverfahren gemäß den Figuren 2 bis 5 vorliegt. Das Verfahren gemäß der Figur 2 zeigt die Vorgehensweise beim Beladen des Kältespeichers, die Figur 3 die Vorgehensweise beim Entladen des Kältespeichers, die Figur 4 die Vorgehensweise beim Beladen des Wärmespeichers und die Figur 5 die Vorgehensweise beim Entladen des Wärmespeichers. Demgemäß finden in einem Verfahren gemäß der Figur 1 Sprünge zu den Schritten 201, 301, 401 bzw. 501 der Figuren 2, 3, 4 bzw.5 statt.

Das Verfahren gemäß der Figur 1 wird mit dem Start des Fahrzeugs gemäß Schritt 101 gestartet. Gemäß dem Schritt 102 erfolgt ein Eingriff in das Motormanagement zum Erreichen eines stabilen Betriebszustands der Brennkraftmaschine. Dann wird in den Schritt 103 übergegangen und überprüft, ob die Betriebstemperatur der Brennkraftmaschine 9 erreicht wurde. Ist dies nicht der Fall, so wird zum Schritt 102 zurückgesprungen und ein Eingriff in das Motormanagement zwecks dem raschen Erreichen der Motorbetriebstemperatur durchgeführt. Andernfalls wird zum Schritt 104 gesprungen und überprüft, ob die Bordnetzspannung U_{B} einen unteren Spannungsgrenzwert Uₘᵢₙ übersteigt. Ist dies nicht der Fall, so wird wiederum zum Schritt 102 zurückgesprungen und der Betrieb der Brennkraftmaschine entsprechend gesteuert, um das rasche Erreichen eines Sollwerts für die Bordnetzspannung zu ermöglichen. Erst wenn auch die Bordnetzspannung U_{B} den Spannungsgrenzwert Uₘᵢₙ übersteigt, wird zum Schritt 105 gesprungen.

Gemäß dem Schritt 105 wird dann überprüft, ob die Innenraumtemperatur T_{I} einer Temperaturvorgabe Tₛₒₗₗ entspricht. Dies ist beispielsweise dann der Fall, wenn die Innenraumtemperatur T_{I} nicht um mehr als einen vorgegebenen Wert von der Temperaturvorgabe Tₛₒₗₗ nach oben oder unten abweicht. Der Bereich der Abweichung um die Temperaturvorgabe Tₛₒₗₗ bildet dabei den Komfortbereich für die Fahrzeuginsassen, und es ist Aufgabe der Klimatisierungseinrichtung im Betrieb des Fahrzeugs dafür zu sorgen, dass die Innenraumtemperatur T_{I} innerhalb dieses Komfortbereichs um die Temperaturvorgabe Tₛₒₗₗ herum verbleibt. Dabei kann der Komfortbereich um die Temperaturvorgabe herum auch in Abhängigkeit der Größen Außentemperatur T_{A}, Sonnenlast S, Temperaturvorgabe Tₛₒₗₗ und des Vorliegens des Heizungs- oder Kühlungsfalles gemäß eines der nachfolgenden Verfahrenschritte erfolgen. Wird im Schritt 105 festgestellt, dass die Innenraumtemperatur T_{I} innerhalb des Komfortbereichs liegt, so wird eine Warteschleife ausgeführt und zum Schritt 105 zurückgesprungen. Andernfalls wird im Schritt 106 überprüft, ob ein Heizen oder ein Kühlen erforderlich ist. Ein Heizfall liegt vor, wenn die Innenraumtemperatur T_{I} den Komfortbereich um die Temperaturvorgabe Tₛₒₗₗ nach unten hin verlassen hat, also um mehr als ein vorgegebenes Maß nach unten von der Temperaturvorgabe Tₛₒₗₗ abweicht. Es wird dann zum Schritt 111 gesprungen.

Es ist dann der Heizungsfall gegeben. Dabei wird zunächst Schritt 111 überprüft, ob die Brennkraftmaschine derzeit in Betrieb ist. Ist dies der Fall, so wird zum Schritt 401 gesprungen und das nachfolgende betreffend Figur 4 beschriebene Verfahren ausgeführt. Andernfalls wird zum Schritt 112 gesprungen und überprüft, ob die Zündung 7 der Brennkraftmaschine eingeschaltet ist. Ist die nicht der Fall, so wird zum Schritt 110 gesprungen und festgestellt, dass das Fahrzeug außer Betrieb genommen wurde und deshalb keine weitere Regelung mehr erfolgt. Wird im Schritt 112 festgestellt, dass die Zündung 7 des Fahrzeugs eingeschaltet ist, so wird daraus geschlossen, dass eine Unterbrechung des Betriebs der Brennkraftmaschine 9 vorliegt, und es wird zum Schritt 501 des Verfahrens, welches nachfolgend bezüglich Figur 5 beschrieben ist, gesprungen.

Wurde im Schritt 106 des Verfahrens festgestellt, dass die Innenraumtemperatur TI größer ist als die Temperaturvorgabe Tₛₒₗₗ bzw. um mehr als ein vorgegebenes Maß nach oben hin von der Temperaturvorgabe Tₛₒₗₗ abweicht, so liegt der Kühlungsfall vor, und es wird vom Schritt 106 zum Schritt 107 gesprungen. Im Schritt 107 des Verfahrens wird zunächst überprüft, ob die Kühlfunktion der Klimatisierungseinrichtung aktiviert ist. Ist dies nicht der Fall, so wird eine Warteschleife ausgeführt bis ein Aktivieren der Klimatisierungseinrichtung erfolgt. Nur dann, wenn die Kühleinrichtung und Kühlfunktion der Klimatisierungseinrichtung aktiviert ist, wird vom Schritt 107 zum Schritt 108 gesprungen. Die Schritte 108 und 109 entsprechen den oben beschriebenen Schritten 111 und 112 des Heizungsfalls. Im Schritt 108 wird also überprüft, ob die Brennkraftmaschine 9 in Betrieb ist. Ist dies der Fall, so wird zum Schritt 201 gesprungen und ein Beladen der Kühlung und eine Innenraumkühlung kann erfolgen, und zwar gemäß dem Verfahren wie es in Figur 2 beschrieben ist. Wird im Schritt 108 des Verfahrens festgestellt, dass die Brennkraftmaschine nicht in Betrieb ist, so wird zum Schritt 109 des Verfahrens gesprungen und überprüft, ob die Zündung 7 des Fahrzeugs ausgeschaltet ist. Ist die Zündung 7 ausgeschaltet, so wird zum Schritt 110 gesprungen und darauf geschlossen, dass das Fahrzeug abgeschaltet ist und somit ein Kühlen und ein Kühlbetrieb nicht erforderlich ist. Das Verfahren wird beendet und auf ein Neustart und somit ein Wiederbeginn des Verfahrens gemäß dem Schritt 101 gewartet. Andernfalls wird im Schritt 109 darauf geschlossen, dass eine Unterbrechung des Betriebs der Brennkraftmaschine vorliegt, beispielsweise weil sich das Fahrzeug im Stillstand befindet und daher die Brennkraftmaschine vorübergehend und für die Dauer des Fahrzeugstillstands außer Betrieb genommen wurde. Es wird dann zum Schritt 301 des Verfahrens gesprungen, es erfolgt ein Entladebetrieb des Kältespeichers beispielsweise gemäß einem Verfahren, wie es in Figur 3 dargestellt und nachfolgend beschrieben ist.

Die Figur 2 zeigt die Vorgehensweise, wenn aufgrund des Schrittes 108 des Verfahrens festgestellt wurde, dass ein Kühlen des Fahrzeugs erfolgen soll und dass die Brennkraftmaschine derzeit in Betrieb ist. Gemäß dem Schritt 201 wird festgestellt, dass ein Kühlen des Fahrzeuginnenraums und eine Beladung des Kältespeichers durchgeführt werden kann. Hierzu wird zunächst zum Schritt 202 des Verfahrens gesprungen, in dem überprüft, wird, ob die Außentemperatur TA wesentlich größer ist als die Temperaturvorgabe Tₛₒₗₗ bzw. der sich um die Temperaturvorgabe Tₛₒₗₗ herum erstreckende Komfortbereich. Ist eine wesentliche Abweichung nicht gegeben, so wird zum Schritt 203 des Verfahrens gesprungen, so wird die übliche Temperaturregelung des Verdampfers durchgeführt und keine Beladung aktiviert. Im Betrieb des Fahrzeugs wird dann die Innenraumtemperatur so eingesteuert, dass sie sich in dem Komfortbereich um die Temperaturvorgabe Tₛₒₗₗ bewegt. Aufgrund der nur geringen Abweichung der Außentemperatur T_{A} vom Komfortbereich bzw. der Temperaturvorgabe Tₛₒₗₗ wird im anschließenden Schritt 205 darauf geschlossen, dass ein Beladen des Speichers nicht erforderlich ist, sondern dass im Betrieb des Fahrzeugs auch im Falle einer zeitlich begrenzten Unterbrechung des Betriebs der Brennkraftmaschine hinreichende Kühlleistung bzw. hinreichend kühle Außenluft zur Verfügung steht, um sicher zu stellen, dass die Innenraumtemperatur T_{I} den Komfortbereich um die Temperaturvorgabe Tₛₒₗₗ herum nicht verlässt, so dass während einer Unterbrechung des Betriebs der Brennkraftmaschine ein Kühlen des Fahrzeuginnenraums mittels von einem Kältespeicher 11 bereitgestellte Energie nicht erforderlich ist. Das Verfahren ist dann beendet, und es kann wieder mit dem Schritt 101 des übergeordneten Verfahrens fortgefahren werden.

Wurde im Schritt 202 des Verfahrens festgestellt, dass die Differenz DT zwischen Außentemperatur T_{A} und Temperaturvorgabe Tₛₒₗₗ um mehr als ein vorgegebenes Maß voneinander abweichen, so wird auf den Bedarf eines Kühlens des Fahrzeuginnenraums bei Unterbrechung des Betriebs der Brennkraftmaschine 9 des Fahrzeugs geschlossen. Es wird dann zum Schritt 204 des Verfahrens gesprungen. Im Schritt 204 des Verfahrens wird anhand von Betriebszuständen des Fahrzeugs überprüft, ob ein Stillstand des Fahrzeugs und somit ein Unterbrechen des Betriebs der Brennkraftmaschine 9 des Fahrzeugs zu erwarten ist. Als Betriebszustand des Fahrzeugs wird gemäß dem vorliegenden Ausführungsbeispiel die Fahrzeuggeschwindigkeit v herangezogen, und es wird geprüft, ob die Fahrzeuggeschwindigkeit v einen Grenzwert v_{grenz} übersteigt. Der Grenzwert liegt beispielsweise bei 70 km/h und ist insbesondere im Bereich von oberhalb der im Stadtverkehr gefahrenen Geschwindigkeiten gewählt. Wird die Grenzgeschwindigkeit v_{grenz} von der Fahrzeuggeschwindigkeit überschritten, so wird zum Schritt 205 des Verfahrens gesprungen. Es wird dann darauf geschlossen, dass ein Stillstand des Fahrzeugs nicht zu erwarten ist und somit ein Beladen eines Kältespeichers nicht erforderlich ist. Es erfolgt dann der normale Kühlbetrieb des Fahrzeuginnenraums jedoch kein Beladen des Kältespeichers. Gemäß dem Schritt 205 kann dann wieder zum Schritt 101 des Verfahrens zurückgesprungen werden.

Wird im Schritt 204 des Verfahrens festgestellt, dass die Fahrzeuggeschwindigkeit v eine Grenzgeschwindigkeit v_{grenz} unterschreitet so wird darauf geschlossen, dass ein möglicher Stillstand des Fahrzeugs wahrscheinlich ist und von daher ein Beladen des Kältespeichers erforderlich ist. Es wird dann zum Schritt 206 des Verfahrens gesprungen. Es wird zunächst ein Kältekreislaufmanagement durchgeführt. Durch das Kältekreislaufmanagement wird die Temperatur am Verdampferaustritt auf ein möglichst niedriges Niveau geregelt, damit die Kälte im Verdampfer gespeichert werden kann und demgemäss ein rasches Beladen des Kältespeichers 11 erfolgen kann. Hierzu wird insbesondere der Klimakompressor 14, welcher von der Brennkraftmaschine 9 angetrieben wird, mit maximaler Leistung betrieben. Dabei kann zur sicheren Unterschreitung der Unterkühlungstemperatur, damit das Speichermedium sicher zu gefrieren beginnt (Kristallbildung/-wachstum), die Lufttemperatur am Verdampferaustritt auf ein Niveau gebracht werden, das vorübergehend auch unter 0° C liegen kann. Nach einer bestimmten Zeit kann dann die Lufttemperatur am Verdampferaustritt wieder auf ein höheres Niveau geregelt werden, welches aber noch unterhalb des Schmelzpunktes des Speichermediums liegt.

Gemäss dem Schritt 207 wird ein Luftverteilungsmanagement durchgeführt. Hierzu wird die Luft zwischen den verschiedenen in den Fahrzeuginnenraum führenden Düsen so verteilt, dass die Kälte am Körper der Insassen optimiert wird und keine Kälteleistung der Klimatisierungseinrichtung verschwendet wird. Hierzu werden insbesondere die Defrost-, Belüftungs-, Fußraum- und Vorraumklappen umgestellt. Darüber hinaus kann eine luftseitige Absperrung vor dem Verdampfer so geschlossen werden, dass ein Teil des Verdampfers als Kältespeicher dient und sich in dem abgesperrten Bereich des Verdampfers eine größere Menge gespeichert und bevorratet wird. Die luftseitige Absperrung deckt insbesondere einen Bereich in einem eingespritzten Strömungspfad und/oder dem Bereich, in dem sich der Kältespeicher befindet ab. Darüber hinaus kann auch noch ein externer Kältespeicher, beispielsweise durch Umwandlung eines Kältespeichermediums vom flüssigen in den festen Zustand (Gefrieren) gespeichert werden, wodurch es möglich ist, ein den Verdampfer durchströmendes Medium auf Kühlertemperatur zu halten und einen Sekundärkreislauf zum eigentlichen Kühlkreislauf des Kühlmittels des Verdampfers zu bilden. Entsprechende Kältespeicher sind dabei bekannt, die Verfahrensdurchführung ist von der Funktionsweise des Kältespeichers prinzipiell unabhängig.

Gemäss dem Schritt 208 erfolgt ein Luftmengenmanagement. Durch Ansteuern beispielsweise des Gebläses 13 und von anderen Luftklappen wird der Luftmassenstrom über den Verdampfer erhöht. Damit die Verdampferaustrittstemperatur entsprechend den Erfordernissen der Regelung der Temperatur des Fahrzeuginnenraums konstant bleibt, wird zusätzlich die Kälteleistung des Verdampfers erhöht. Darüber hinaus kompensiert auch die Erhöhung des Luftmassenstrom bzw. des Betriebszustandes des Gebläses 13 den zusätzlichen Druckanstieg durch die luftseitige Absperrung am Verdampfer 12 und/oder Kältespeicher 11. Der Betrieb des Gebläses 13 wird insbesondere durch Erhöhen der dem elektrischen Antriebsmotor zugeführten Spannung erhöht.

Anschließend erfolgt gemäss dem Schritt 209 des Verfahrens die Ermittlung eines Ladezustandes des Kältespeichers. Es wird hierzu insbesondere überprüft, ob die Ladezeit eine Mindestladedauer tₘᵢₙ übersteigt. Es kann auch überprüft werden, ob die Beladung des Kältespeichers ein gewisses Maß bezüglich der maximalen Ladung erreicht hat bzw. ob die Beladung ausreichend groß ist, um bei den gegebenen Bedingungen von Außentemperatur T_{A}, Sonneneinstrahlung S und Innenraumtemperatur T_{I} sowie Temperaturvorgabe T_{Soll} über die zu erwartende Dauer eines oder einer geringen Anzahl von aufeinanderfolgenden Unterbrechungen des Betriebs der Brennkraftmaschine ausreicht. Ist dies nicht der Fall, so wird gemäss dem Schritt 210 wiederum zum Schritt 206 gesprungen. Wird im Schritt 210 festgestellt, dass Kältespeicher 11 nach diesen Kriterien ausreichend beladen ist, so wird zum Schritt 211 gesprungen und eine Markierung gesetzt, wonach ein Entladen des Kältespeichers möglich ist. Anschließend wird zum Schritt 212 gesprungen und die Beladung der Kühlung beendet. Das Verfahren kann dann mit dem Schritt 101 des Verfahrens bzw. durch Zurückspringen zum Schritt 201 des Verfahrens fortgesetzt werden und die Kühlung des Innenraums des Fahrzeugs kann durch normale Ansteuerung und normalen Betrieb der Klimatisierungseinrichtung so gesteuert werden, dass die Innenraumtemperatur T_{I} nicht von der Temperaturvorgabe T_{Soll} bzw. dem sich daraus ergebenden Komfortbereich abweicht.

Die Figur 3 zeigt die Vorgehensweise, falls in der Figur 1 festgestellt wurde, dass ein Unterbrechen des Betriebs der Brennkraftmaschine vorliegt und ein Kühlen des Fahrzeugs während der Unterbrechung des Betriebs der Brennkraftmaschine 9 durchgeführt werden soll. Der Entladevorgang des Kältespeichers wird gemäss dem Schritt 301 gestartet. Es wird zum Schritt 302 übergegangen und überprüft, ob eine Entladung des Kältespeichers zulässig ist, insbesondere ob das in Schritt 211 generierte Signal des ausreichenden Ladezustandes des Kältespeichers vorliegt. Ist dies nicht der Fall so wird zum Schritt 312 gesprungen und das Entladeverfahren des Kältespeichers ist nicht zulässig. In diesem Fall kann es möglich sein, dass ein Unterbrechen des Betriebs der Brennkraftmaschine nicht zugelassen wird und ein entsprechendes Signal erzeugt wird, das dafür sorgt, dass ein solches Unterbrechen nicht erfolgt. Wurde im Schritt 302 festgestellt, dass ein Entladen des Kältespeichers zulässig ist, so wird gemäss dem Schritt 303 überprüft, ob die Bordnetzspannung U_{B} größer ist als ein Spannungsgrenzwert Uₘᵢₙ. Ist dies nicht der Fall, so wird zum Schritt 304 gesprungen und die Brennkraftmaschine 9 des Fahrzeugs sofort wieder in Betrieb genommen. Es wird dann darauf geschlossen, dass der Ladezustand des Bordnetzes nicht hinreichend ist, um nach einem vorrübergehenden Stillstand, also einer Unterbrechung des Betriebs der Brennkraftmaschine, ein gesichertes Wiederinbetriebnehmen der Brennkraftmaschine zu ermöglichen.

Wird im Schritt 303 dagegen festgestellt, dass die Bordnetzspannung U_{B} den Spannungsgrenzwert Uₘᵢₙ übersteigt, so wird zum Schritt 305 des Verfahrens übergegangen. Dabei beschreiben die Verfahrensschritte 305 bis 307 die Vorgehensweise, welche bei einem Entladen des Kältespeichers vorgenommen werden. Es wird zunächst gemäss dem Schritt 305 ein Luftmanagement durchgeführt. Hierzu wird die Klimatisierungseinrichtung 10 vom Frischluft- auf den Umluftmodus geschaltet, soweit dieser nicht schon aktiviert ist. Dies hat den Vorteil, dass nur bereits vorgekühlte und entfeuchtete Luft über den Verdampfer und/oder den Kältespeicher strömt und somit wesentlich weniger Kälteleistung benötigt wird, um eine behagliche Ausblastemperatur am Verdampfer und/oder Kältespeicher zu erzielen und dadurch wird weniger Energie benötigt, um den Regelungsbereich um die Temperaturvorgabe T_{Soll} herum aufrecht zu erhalten. Gemäss dem Schritt 306 erfolgt ein Luftmengenmanagement. Hierzu wird die Luftmenge, welche über den Verdampfer 12 und/oder den Kältespeicher 11 strömt, um gekühlt zu werden, in Abhängigkeit der Außentemperatur T_{A} und der Sonneneinstrahlung S reduziert. Dazu wird das Gebläse 13 der Klimatisierungseinrichtung 10 über eine entsprechend vorgegebene Entladungskennlinie angesteuert. Die Entladungskennlinie des Gebläses kann neben der Außentemperatur T_{A} und der Sonneneinstrahlung S auch von der Verdampferausblastemperatur, Stellung eines Gebläsereglers und ähnlichen weiteren Größen abhängig sein. Die Minimierung des Luftmassenstroms über den Verdampfer 12 bzw. das Gebläse 13 hat den Vorteil, dass wesentlich weniger Kälteleistung benötigt wird, um die behagliche Ausblastemperatur am Verdampfer bzw. Kältespeicher zu erhalten und somit den Regelbereich um die Temperaturvorgabe T_{Soll} aufrecht zu erhalten.

Darüber hinaus erfolgt ein Luftverteilungsmanagement. Hierzu wird die Luft zwischen den verschiedenen Düsen im Fahrzeuginnenraum so verteilt, dass die Verteilung der Kälte der einströmenden Luft am Körper der Insassen optimiert wird und somit keine Kälte verschwendet wird. Hierzu werden insbesondere die Defrost-, Belüftungs-, Fußraum- und Vorraumklappen der Klimatisierungseinrichtung entsprechend angesteuert und eingestellt. Bei der Beladung des Kältespeichers kann eine luftseitige Absperrung vor dem Verdampfer und/oder Kältespeicher aktiviert worden sein. Für diesen Fall wird bei der Entladung mit einer Zeitverzögerung die Absperrung im Einspritzbereich des Verdampfers und/oder des Kältespeichers 11 aufgehoben, aber gleichzeitig der restliche Bereich des Verdampfers 12 und/oder Kältespeichers 11, der bisher noch nicht abgesperrt war, abgesperrt. Dadurch wird nur der Bereich des Verdampfers 12 und/oder des Kältespeichers 11 durchströmt, in dem flüssiges, gekühltes Kältemittel gesammelt wurde, welches danach verdampfen kann.

Somit kann durch die Vorgehensweise gemäss den Schritten 305 bis 307 die in dem Kältespeicher 11 bzw. dem Verdampfer 12 bzw. einem Kältespeicherbereich des Verdampfers 12 vorhandene Kältemenge sehr effizient genützt werden, die Ausblastemperatur am Verdampfer und/oder die Ausblastemperatur des Kältespeichers kann so auf einem komfortablen Niveau gehalten werden und die Temperaturerhöhung im Innenraum wird auch eingeschränkt bzw. der Komfortbereich um die Temperaturvorgabe T_{Soll} kann aufrechterhalten werden.

Der Ladezustand des Kältespeichers wird gemäss dem Schritt 308 anschließend ermittelt und kann beispielsweise dadurch abgefragt werden, indem die Ausblastemperatur oder die Lufttemperatur nach Verdampfer gemessen wird und überprüft wird, ob ein Grenzwert nach oben hin überschritten wird. Wird beispielsweise die Temperatur von 15°C am Verdampfer und/oder Kältespeicher überschritten, so ist der Kältespeicher geleert. In diesem Fall kann gemäss dem Schritt 309 entweder zu einem der alternativ durchgeführten Verfahren nach den Schritten 310a und 311a, 310b und 311b bzw. 310c und 311c gesprungen werden. Jedes dieser Verfahren kann entweder nach Auswahl durch den Benutzer des Fahrzeugs oder aber nach konstruktiver Vorgabe durch den Hersteller der Klimatisierungseinrichtung oder des Fahrzeugs alternativ durchgeführt werden, wenn während des Entladens festgestellt wird, dass der Kältespeicher der Klimatisierungseinrichtung entleert ist, allerdings ein weiteres Entladen des Kältespeichers erforderlich wäre.

Wird im Schritt 309 festgestellt, dass ein weiteres Entladen der Klimatisierungseinrichtung nicht erforderlich ist, beispielsweise weil eine Wiederaufnahme des Betriebs der Brennkraftmaschine eingetreten ist, wird der Entladevorgang beendet und zum Schritt 312 gesprungen. Andernfalls wird vom Schritt 309 zum Schritt 303 des Verfahrens zurückgesprungen.

Im Schritt 310a des Verfahrens wird überprüft, ob ein manuelles Beladen des Kältespeichers ermöglicht wird. Zum Durchführen des manuellen Beladens wird gemäss dem Schritt 311a eine Aktion vom Fahrer des Fahrzeugs erwartet, beispielsweise die Betätigung einer Aktivierungstaste, die den Beladebetrieb des Kältespeichers dadurch startet, dass die Brennkraftmaschine des Fahrzeugs wieder in Betrieb genommen wird, kurzfristig ein Kühlen des Fahrzeugs über die Klimatisierungseinrichtung und den Kompressor in normalen Kühlbetrieb erfolgen kann. Alternativ ist es möglich, dass ein automatisches Beladen des Kältespeichers erfolgen kann, dies erfolgt gemäss dem Schritt 310b in Verbindung mit dem Schritt 311 b dadurch, dass ein automatisches in Betrieb nehmen der Brennkraftmaschine 9 des Fahrzeugs erfolgt. Andernfalls wird gemäss dem Schritt 310c festgestellt, dass eine Beladung nicht erfolgen kann und der Kältespeicher keine Kälteleistung mehr bringt. Um die Verschlechterung des thermischen Komforts im Auto zu minimieren, bis die Unterbrechung des Betriebs der Brennkraftmaschine 9 des Fahrzeugs beendet wird, wird ein besonderes Luftmanagement gestartet, wobei hierzu die Luftmenge und der Umluft-/Frischluftbetrieb in Abhängigkeit von Außentemperatur T_{A}, Innenraumtemperatur T_{I} und Sonnenlast S eingestellt wird.

Das Verfahren gemäss Figur 4 für das Beladen des Wärmespeichers entspricht der Vorgehensweise des Verfahrens gemäß der Figur 2 für das Beladen des Kältespeichers. Gemäß Schritt 401 wird das Beladen des Wärmespeichers aktiviert. Hierzu wird zunächst gemäss dem Schritt 402 überprüft, ob die Temperaturvorgabe T_{Soll} wesentlich größer ist als die Außentemperatur T_{A}. Ist dies nicht der Fall, so wird gemäß dem Schritt 403 darauf geschlossen, dass ein Beladen des Wärmespeichers nicht erforderlich ist, und deshalb erfolgt ein normales Beheizen des Fahrzeuginnenraums in üblicher Weise gemäß dem Schritt 403 des Verfahrens. Anschließend wird zum Schritt 405 gesprungen. Eine Beladung ist nicht notwendig und das Verfahren gemäß der Figur 4 ist abgeschlossen. Wurde im Schritt 402 festgestellt, dass eine erhebliche Temperaturabweichung vorliegt, so wird zum Schritt 404 übergegangen und überprüft, ob der Fahrzeugzustand, nämlich die Fahrzeuggeschwindigkeit v einen Grenzwert v_{Grenz} unterschreitet. Ist dies nicht der Fall, so wird festgestellt, dass eine Unterbrechung des Betriebs der Brennkraftmaschine nicht bevorsteht und es wird zum Schritt 405 des Verfahrens gesprungen.

Der Wärmespeicher wird beladen, hierzu werden die Schritte 406 bis 408 durchgeführt. Im Schritt 406 erfolgt ein Luftverteilungsmanagement, wonach die Luft, die den Heizungswärmetauscher durchströmt hat, zwischen den unterschiedlichen Düsen so verteilt wird, dass die Verteilung der Wärme am Körper der Insassen optimiert wird und keine Wärme verschwendet wird. Hierzu können die Defrost-, Belüftungs- und weiteren Düsen- und Steuerungsklappen der Klimatisierungseinrichtung geeignet angesteuert werden.

Darüber hinaus kann noch eine luftseitige Absperrung vor einem Teil des Heizungswärmetauscher und/oder Wärmespeichers aktiviert werden, so dass die Wärme im abgesperrten Bereich gespeichert werden kann. Die luftseitige Absperrung kann dabei einem Bereich im eingespritzten Strömungspfad und/oder dem Bereich, in dem sich der Wärmespeicher befindet, abdecken. Gemäss dem Schritt 407 wird der Ladezustand des Wärmespeichers ermittelt. Hierzu kann beispielsweise seine Kerntemperatur erfasst werden oder erfasst werden, ein wie hoher Anteil seines Wärmespeichermediums einen Phasenzustandswechsel durchgeführt hat. Dies kann auch dadurch erfolgen, dass die Beladungszeit des Wärmespeichers gemessen wird und festgestellt wird, ob diese eine Mindestladedauer tₘᵢₙ überschritten hat. Ist diese noch nicht erreicht, so wird dann zum Schritt 406 zurückgesprungen und ein weiteres Beladen des Wärmespeichers erfolgt. Ist der Wärmespeicher hinreichend geladen, so wird zum Schritt 409 des Verfahrens gesprungen und ein Signal gesetzt, wonach der Wärmespeicher entladen werden kann. Anschließend wird zum Schritt 410 des Verfahrens gesprungen und das Beladen des Wärmespeichers ist abgeschlossen.

Die Figur 5 zeigt die Vorgehensweise beim Entladen des Wärmespeichers, wie sie bei einer Unterbrechung des Betriebs der Brennkraftmaschinen 9 und im Heizungsfall auftritt. Auch die Vorgehensweise der Figur 5 beim Entladen des Wärmespeichers entspricht der Vorgehensweise beim Entladen des Kältespeichers bei entsprechend umgekehrter Temperaturbeziehung zwischen Außentemperatur T_{A} und Innentemperatur T_{I} bzw. Temperaturvorgabe T_{Soll}. Dennoch entsprechen die Verfahrensschritte 501 bis 512 den Verfahrensschritten 301 bis 312.

Im Schritt 501 des Verfahrens wird der Entladevorgang des Wärmespeichers gestartet. Hierzu wird gemäss dem Schritt 502 zunächst überprüft, ob ein Entladen des Wärmespeichers 15 zulässig ist, insbesondere ob in Schritt 409 des Beladeverfahrens ein entsprechendes Signal gesetzt wurde. Ist dies nicht der Fall, so wird zum Schritt 512 gesprungen und der Entladevorgang beendet.

Andernfalls wird gemäß dem Schritt 503 überprüft, ob die Bordnetzspannung U_{B} einen bestimmten Spannungsgrenzwert Uₘᵢₙ übersteigt, der sicherstellen soll, dass hinreichend Ladekapazität des Energiespeichers des Fahrzeugs vorliegt, um das Fahrzeug während der Unterbrechung des Betriebs der Brennkraftmaschine in der erforderlichen Form aufrecht zu erhalten und anschließend wieder zu starten. Wird der Grenzwert unterschritten, so wird gemäss dem Schritt 503 zum Schritt 504 gesprungen und die Brennkraftmaschine 9 des Fahrzeugs wieder in Betrieb genommen. Andernfalls wird das Beheizen des Fahrzeuginnenraums aus dem Wärmespeicher gemäss den Schritten 505 bis 508 vorgenommen. Zunächst erfolgt gemäss dem Schritt 505 ein Luftmanagement, wonach die Klimaanlage von Frischluft auf Umluft umgeschaltet wird, soweit dies nicht schon geschehen ist. Dies hat den Vorteil, dass nur bereits vorgeheizte Luft über den Heizkörper und/oder den Wärmespeicher strömt und somit wesentlich weniger Wärmeleistung zum Aufrechterhalten der Fahrzeuginnenraum T_{I} um die Temperaturvorgabe T_{Soll} herum zu ermöglichen.

Gemäss dem Schritt 506 erfolgt ein Luftmengenmanagement, wonach die Luftmenge, welche über den Heizkörper und/oder den Wärmespeicher erwärmt wird, in Abhängigkeit der Außentemperatur T_{A}, der Sonneneinstrahlung S und der Differenz D_{T} zwischen Außentemperatur T_{A} und Temperaturvorgabe T_{Soll} durch Ansteuern des Gebläses 13 entsprechend einer Entladungskennlinie des Gebläses anzusteuern. Auch dies dient dem Zweck, die Wärmeleistung zum Aufrechterhalten der Innenraumtemperatur T_{I} im Bereich um die Temperaturvorgabe T_{Soll} herum zu verringern.

Gemäss dem Schritt 507 erfolgt noch ein Luftverteilungsmanagement, so dass die erwärmte Luft, welche den Heizungswärmetauscher 16 und/oder den Wärmespeicher 15 durchströmt hat, noch so in den Fahrzeuginnenraum eingeleitet wird, dass die Verteilung der Wärme am Körper der Insassen optimiert wird, wozu die Klappen und Luftleitungsmittel der Klimatisierungseinrichtung entsprechend angesteuert werden. Entsprechend der Vorgehensweise bei dem Kältemittelspeichern kann auch eine Absperrung vor dem Heizkörper deaktiviert und der vorher nicht abgesperrte Bereich des Heizkörpers bzw. des Heizungswärmetauschers abgesperrt werden, um so eine Entladung dieses Bereichs zu ermöglichen. Gemäss dem Schritt 508 wird beispielsweise aufgrund der Ausblastemperatur stromabwärts des Heizungswärmetauschers 16 überprüft, ob der Ladezustand des Wärmespeichers 15 hinreichend groß ist, um ein weiteres Entladen zu ermöglichen. Dies ist beispielsweise dann nicht mehr der Fall, wenn die Ausblastemperatur stromabwärts des Heizungswärmetauschers 16 einen Grenzwert unterschreitet oder aber die Temperatur im Wärmespeicher einen Grenzwert unterschreitet.

Im Schritt 509 des Verfahrens wird überprüft, ob ein weiteres Entladen des Wärmespeichers erforderlich und möglich ist. Ist dies der Fall, so wird zum Schritt 503 gesprungen. Ist ein weiteres Entladen des Wärmespeichers nicht möglich, so wird zum Schritt 512 gesprungen. Wäre ein weiteres Entladen des Wärmespeichers notwendig, also ein weiteres Heizen des Fahrzeuginnenraums mit Energie aus dem Wärmespeicher, liegt jedoch kein ausreichender Ladezustand des Wärmespeichers 15 mehr vor, so kann alternativ eines der Verfahren gemäss den Schritten 510a und 511 a, 510b und 511 b bzw. 510c und 511 c, wobei die Auswahl des Verfahrens entweder konstruktiv oder durch den Fahrzeugführer vorgenommen wird. Gemäss dem Schritt 510a erfolgt ein manuelles Beladen des Wärmespeichers. Hierzu wird gemäss dem Schritt 511 a dann ein Wiederinbetriebnehmen der Brennkraftmaschine 9 des Fahrzeugs durchgeführt, wenn der Fahrer einen entsprechenden Wunsch durch Betätigen eines entsprechenden Bedienelements äußert. Alternativ kann gemäss dem Schritt 510b ein automatisches Beladen des Wärmespeichers erfolgen, in dem ein automatisches Inbetriebnehmen der Brennkraftmaschine 9 gemäß dem Schritt 511 b erfolgt. Alternativ kann auch mit dem Schritt 510c vorgesehen sein, dass keine Beladung erfolgt. Gemäss dem Schritt 511 c wird dann ein Notluftmanagement aktiviert, um die Verschlechterung des thermischen Komforts im Fahrzeuginnenraum zu minimieren, bis die Unterbrechung des Betriebs der Brennkraftmaschine 9 beendet ist. Hierzu wird die Luftmenge, also der Betrieb des Gebläses 13 des Fahrzeugs und die Stellung von Umluft- und Frischluftbetrieb in Abhängigkeit von Parametern wie Außentemperatur T_{A}, Innentemperatur T_{I} und der Sonnenlast eingestellt.

## Patentansprüche

1. Verfahren zum Betreiben einer Klimatisierungseinrichtung (10) für Fahrzeuge, mit einer Brennkraftmaschine (9) zum Betreiben des Fahrzeugs und einer Einrichtung (8) zum Unterbrechen des Betriebs der Brennkraftmaschine im Fahrzeugstillstand für die Dauer des Fahrzeugstillstands, wobei im Betrieb des Fahrzeugs das Aufladen wenigstens eines Kältespeichers (11) erfolgt und während einer Unterbrechung des Betriebes der Brennkraftmaschine ein Kühlen des Fahrzeuginnenraums unter Ausnutzung der im Kältespeicher gespeicherten Energie erfolgen kann und wobei im Betrieb des Fahrzeugs das Aufladen wenigstens eines Wärmespeichers (15) erfolgt und während einer Unterbrechung des Betriebes der Brennkraftmaschine ein Heizen des Fahrzeuginnenraums unter Ausnutzen der im Wärmespeicher (15) gespeicherten Energie erfolgen kann, wobei für das Beheizen des Fahrzeuginnenraums bei unterbrochenem Betrieb der Brennkraftmaschine der Wärmespeicher vorgesehen ist, wobei ein Beladen des Wärmespeichers (15) in Abhängigkeit von Betriebszuständen des Fahrzeugs erfolgt, **dadurch gekennzeichnet, dass** als ein Betriebszustand des Fahrzeugs eine die Wahrscheinlichkeit des Auftretens einer Unterbrechung des Betriebs der Brennkraftmaschine (9) repräsentierende Größe herangezogen wird.

2. Verfahren nach Anspruch 1, **dadurch gekennzeichnet, dass** als Betriebszustand des Fahrzeugs die Fahrzeuggeschwindigkeit (v) herangezogen wird, wobei insbesondere vorgesehen ist, dass das Beladen des Wärmespeichers (15) dann erfolgt, wenn die Fahrzeuggeschwindigkeit kleiner als eine Geschwindigkeit (v_{grenz}) ist, welche vorzugsweise größer gewählt ist, als die im Stadtverkehr gefahrenen Geschwindigkeiten und insbesondere im Bereich von 60 bis 80 km/h liegt.

3. Verfahren nach einem der Ansprüche 1 oder 2, **dadurch gekennzeichnet, dass** das Beladen des Wärmespeichers (15) in Abhängigkeit einer Temperaturvorgabe (Tₛₒₗₗ) für den Innenraum des Fahrzeugs erfolgt.

4. Verfahren nach Anspruch 3, **dadurch gekennzeichnet, dass** das Beladen des Wärmespeichers (15) nur erfolgt, wenn die Außentemperatur (T_{A}) kleiner ist als die Temperaturvorgabe (Tₛₒₗₗ) für den Innenraum und insbesondere um mehr als ein bestimmtes Maß von der Temperaturvorgabe (Tₛₒₗₗ) nach unten abweicht.

5. Verfahren nach einem der vorhergehenden Ansprüche, **dadurch gekennzeichnet, dass** das Unterbrechen des Betriebs der Brennkraftmaschine unterdrückt wird, soweit nicht ein Mindestladezustand des Wärmespeichers (15) erreicht ist, wobei der Mindestladezustand vorzugsweise durch eine Mindestladedauer (tₘᵢₙ) und/oder Mindesttemperatur (Tₘᵢₙ) im Wärmespeicher vorgegeben ist, wobei der Mindestladezustand insbesondere in Abhängigkeit wenigstens einer der Größen aus Außentemperatur (T_{A}), Differenz (dT) von Außentemperatur (T_{A}) zu Temperaturvorgabe (Tₛₒₗₗ) und Sonneneinstrahlung (S) erfolgt.

6. Verfahren nach einem der vorhergehenden Ansprüche, **dadurch gekennzeichnet, dass** das Beladen des Wärmespeichers (15) in Abhängigkeit wenigstens einer der Größen aus Innenraumtemperatur (T_{I}), Außentemperatur (T_{A}), Luftfeuchtigkeit, Sonneneinstrahlung (S) erfolgt.

7. Verfahren nach einem der vorhergehenden Ansprüche, **dadurch gekennzeichnet, dass** für das Beladen des Wärmespeichers (15) die Temperatur des Kühlmediums der Brennkraftmaschine auf einen oberen Grenzwert angehoben wird.

8. Verfahren nach einem der vorhergehenden Ansprüche, **dadurch gekennzeichnet, dass** ein Beheizen des Fahrzeuginnenraums mittels der Energie eines Wärmespeichers (15) bei unterbrochenem Betrieb der Brennkraftmaschine nur erfolgt, wenn Fahrzeugstillstand und eingeschaltete Zündung des Fahrzeugs gegeben sind.

9. Verfahren nach einem der vorhergehenden Ansprüche, **dadurch gekennzeichnet, dass** ein Heizen des Fahrzeuginnenraums bei unterbrochenem Betrieb der Brennkraftmaschine nur erfolgt, wenn die Bordnetzspannung (U_{B}) einen Spannungsgrenzwert (Uₘᵢₙ) übersteigt.

10. Verfahren nach einem der vorhergehenden Ansprüche, **dadurch gekennzeichnet, dass** das Beheizen des Fahrzeuginnenraums bei unterbrochenem Betrieb der Brennkraftmaschine (9) im Umluft- oder Teilumluftbetrieb erfolgt.

11. Verfahren nach einem der vorhergehenden Ansprüche, **dadurch gekennzeichnet, dass** beim Beheizen des Fahrzeuginnenraums bei unterbrochenem Betrieb der Brennkraftmaschine (9) der Luftmassenstrom über den Heizungswärmetauscher (16) und/oder Wärmespeicher (15) minimiert wird.

12. Verfahren nach Anspruch 11, **dadurch gekennzeichnet, dass** der Luftmassenstrom in Abhängigkeit wenigstens einer der Größen aus Außentemperatur (T_{A}), Differenz zwischen Außentemperatur und Temperaturvorgabe (Tₛₒₗₗ) und Sonneneinstrahlung (S) bestimmt wird.

13. Verfahren nach einem der Ansprüche 11 oder 12, **dadurch gekennzeichnet, dass** der Betrieb des Gebläses (13) der Klimatisierungseinrichtung (10) in Abhängigkeit einer Entladekennlinie des Wärmespeichers (15) erfolgt, wobei die Entladekennlinie (15) insbesondere in Abhängigkeit wenigstens einer der Größen aus Außentemperatur (T_{A}), Sonneneinstrahlung (S), Wärmetauscherausblastemperatur und Innenraumtemperatur (T_{I}) vorgegeben ist.

14. Verfahren nach einem der vorhergehenden Ansprüche, **dadurch gekennzeichnet, dass** die Luftführung und Luftverteilung der Luft zu den Luftaustrittsdüsen im Sinne des Erzeugens maximaler Wärmewirkung im Körperbereich der Fahrzeuginsassen gesteuert ist.

15. Verfahren nach einem der Ansprüche 8 bis 14, **dadurch gekennzeichnet, dass** ein Unterdrücken des Unterbrechens des Betriebs der Brennkraftmaschine (9) erfolgt, soweit die erzielbare Heizleistung im unterbrochenen Betrieb der Brennkraftmaschine (9) nicht eine Mindestgröße übersteigt, wobei die Mindestgröße vorzugsweise durch eine Mindestladedauer (tₘᵢₙ) und/oder Mindesttemperatur (Tₘᵢₙ) im Wärmespeicher vorgegeben ist, wobei der Mindestladezustand insbesondere in Abhängigkeit wenigstens einer der Größen aus Außentemperatur (T_{A}), Sonneneinstrahlung (S) und Differenz (dT) von Außentemperatur (T_{A}) und Temperaturvorgabe (Tₛₒₗₗ) erfolgt.

## Claims

1. Method for the operation of an air conditioner (10) for vehicles, comprising an internal combustion engine (9) for operating the vehicle and a device (8) for interrupting the operation of the internal combustion engine while the vehicle is stationary for the duration of the stoppage, wherein at least one cold accumulator (11) is charged during the operation of the vehicle and the vehicle interior can be cooled utilising the energy stored in the cold accumulator while the operation of the internal combustion engine is interrupted, and wherein at least one heat accumulator (15) is charged during the operation of the vehicle and the vehicle interior can be heated utilising the energy stored in the heat accumulator (15) while the operation of the internal combustion engine is interrupted, wherein the heat accumulator is provided for heating the vehicle interior while the operation of the internal combustion engine is interrupted, the heat accumulator (15) being charged in dependence on operating states of the vehicle, **characterised in that** a variable representing the probability of an interruption of the operation of the internal combustion engine (9) is used as an operating state of the vehicle.

2. Method according to claim 1, **characterised in that** the vehicle speed (v) is used as an operating state of the vehicle, wherein it is in particular provided that the heat accumulator (15) is charged while the vehicle speed is lower than a speed (v_{grenz}), which is preferably chosen to be higher than the speeds used in city traffic and lies in particular in the range of 60 to 80 km/h.

3. Method according to claim 1 or 2, **characterised in that** the heat accumulator (15) is charged in dependence on a set temperature (Tₛₒₗₗ) for the interior of the vehicle.

4. Method according to claim 3, **characterised in that** the heat accumulator (15) is charged only if the external temperature (T_{A}) is lower than the set temperature (Tₛₒₗₗ) for the interior and in particular falls below the set temperature (Tₛₒₗₗ) by more than a defined degree.

5. Method according to any of the preceding claims, **characterised in that** the interruption of the operation of the internal combustion engine is suppressed unless a minimum charge state of the heat accumulator (15) is reached, the minimum charge state being preferably predetermined by a minimum charge duration (tₘᵢₙ) and/or a minimum temperature (Tₘᵢₙ) in the heat accumulator, the minimum charge state depending in particular on at least one of the variables including external temperature (T_{A}), differential (dT) between external temperature (T_{A}) and set temperature (Tₛₒₗₗ) and insolation (S).

6. Method according to any of the preceding claims, **characterised in that** the heat accumulator (15) is charged in dependence on at least one of the variables including interior temperature (T_{I}), external temperature (T_{A}), atmospheric humidity and insolation (S).

7. Method according to any of the preceding claims, **characterised in that** the temperature of the coolant of the internal combustion engine is raised to an upper limit value for charging the heat accumulator (15).

8. Method according to any of the preceding claims, **characterised in that** the vehicle interior is only heated using the energy of a heat accumulator (15) while the operation of the internal combustion engine is interrupted if the vehicle is stationary and the vehicle ignition is switched on.

9. Method according to any of the preceding claims, **characterised in that** the vehicle interior is only heated while the operation of the internal combustion engine is interrupted if the voltage of the electrical system (Uₛ) exceeds a voltage limit value (Uₘᵢₙ).

10. Method according to any of the preceding claims, **characterised in that** the vehicle interior is heated while the operation of the internal combustion engine (9) is interrupted in the recirculation or partial recirculation mode.

11. Method according to any of the preceding claims, **characterised in that** the air mass flow rate across the heating heat exchanger (16) and/or the heat accumulator (15) is minimised when heating the vehicle interior while the operation of the internal combustion engine (9) is interrupted.

12. Method according to claim 11, **characterised in that** the air mass flow rate is determined in dependence on at least one of the variables including external temperature (T_{A}), differential (dT) between external temperature (T_{A}) and set temperature (Tₛₒₗₗ) and insolation (S).

13. Method according to claim 11 or 12, **characterised in that** the fan (13) of the air conditioner (10) is operated in dependence on a discharge characteristic of the heat accumulator (15), the discharge characteristic (15) being in particular predetermined in dependence on at least one of the variables including external temperature (T_{A}), insolation (S), heat exchanger outlet temperature and interior temperature (T_{I}).

14. Method according to any of the preceding claims, **characterised in that** the air ducting and the distribution of air to the air outlets is controlled to generate maximum heat in the body region of the vehicle occupants.

15. Method according to any of claims 8 to 14, **characterised in that** the interruption of the operation of the internal combustion engine (9) is suppressed in so far as the obtainable heating power does not exceed a minimum value while the operation of the internal combustion engine (9) is interrupted, the minimum value being preferably predetermined by a minimum charge duration (tₘᵢₙ) and/or a minimum temperature (Tₘᵢₙ) in the heat accumulator, the minimum charge state resulting in particular in dependence on at least one of the variables including external temperature (T_{A}), insolation (S) and differential (dT) between external temperature (T_{A}) and set temperature (Tₛₒₗₗ).

## Revendications

1. Procédé de fonctionnement d'un système de climatisation (10) pour des véhicules comprenant un moteur à combustion interne (9) servant au fonctionnement du véhicule et un dispositif (8) servant à interrompre le fonctionnement du moteur à combustion interne en cas d'arrêt du véhicule et prévu pour la durée de l'arrêt du véhicule où, au cours du fonctionnement du véhicule, il se produit la charge d'au moins un accumulateur de froid (11) et, au cours d'une interruption du fonctionnement du moteur à combustion interne, il peut se produire un refroidissement de l'habitacle du véhicule grâce à l'utilisation de l'énergie stockée dans l'accumulateur de froid et où, au cours du fonctionnement du véhicule, il se produit la charge d'au moins un accumulateur de chaleur (15) et, au cours d'une interruption du fonctionnement du moteur à combustion interne, il peut se produire un chauffage de l'habitacle du véhicule grâce à l'utilisation de l'énergie stockée dans l'accumulateur de chaleur (15) où, pour le chauffage de l'habitacle du véhicule, en cas de fonctionnement interrompu du moteur à combustion interne, il est prévu l'accumulateur de chaleur, où une charge de l'accumulateur de chaleur (15) se produit en fonction des conditions de fonctionnement du véhicule,
**caractérisé en ce que** l'on utilise, comme condition de fonctionnement du véhicule, une variable représentant la probabilité d'occurrence d'une interruption du fonctionnement du moteur à combustion interne (9).

2. Procédé selon la revendication 1, **caractérisé en ce que** l'on utilise, comme condition de fonctionnement du véhicule, la vitesse (v) du véhicule, où il est prévu, en particulier, que la charge de l'accumulateur de chaleur (15) se produit alors si la vitesse du véhicule est inférieure à une vitesse (vₗᵢₘᵢₜₑ) qui est choisie en étant, de préférence, supérieure aux vitesses de circulation en milieu urbain, et se situe, en particulier, dans la plage comprise entre 60 km/h et 80 km/h.

3. Procédé selon l'une des revendications 1 ou 2, **caractérisé en ce que** la charge de l'accumulateur de chaleur (15) se produit en fonction d'une température prédéfinie (T_{théorique}) pour l'habitacle du véhicule.

4. Procédé selon la revendication 3, **caractérisé en ce que** la charge de l'accumulateur de chaleur (15) se produit seulement si la température extérieure (T_{A}) est inférieure à la température prédéfinie (T_{thèorique}) pour l'habitacle et, en particulier, s'écarte de la température prédéfinie (T_{théorique}), de plus d'une certaine valeur, ledit écart se produisant vers le bas.

5. Procédé selon l'une quelconque des revendications précédentes, **caractérisé en ce que** l'interruption du fonctionnement du moteur à combustion interne est supprimée, dans la mesure où un état de charge minimum de l'accumulateur de chaleur (15) n'est pas atteint, où l'état de charge minimum est prédéfini, de préférence, par une durée de charge minimum (tₘᵢₙ) et / ou par une température minimum (Tₘᵢₙ) dans l'accumulateur de chaleur, où l'état de charge minimum se produit en particulier en fonction d'au moins l'une des variables telles que la température extérieure (T_{A}), la différence (dT) entre la température extérieure (T_{A}) et la température prédéfinie (T_{théorique}), et l'ensoleillement (S).

6. Procédé selon l'une quelconque des revendications précédentes, **caractérisé en ce que** la charge de l'accumulateur de chaleur (15) se produit en fonction d'au moins l'une des variables telles que la température (T_{I}) de l'habitacle, la température extérieure (T_{A}), l'humidité de l'air, l'ensoleillement (S).

7. Procédé selon l'une quelconque des revendications précédentes, **caractérisé en ce que**, pour la charge de l'accumulateur de chaleur (15), la température de l'agent de refroidissement du moteur à combustion interne est relevée à une valeur limite supérieure.

8. Procédé selon l'une quelconque des revendications précédentes, **caractérisé en ce qu'**un chauffage de l'habitacle du véhicule grâce à l'énergie d'un accumulateur de chaleur (15), en cas de fonctionnement interrompu du moteur à combustion interne, se produit seulement si l'arrêt du véhicule et la mise sous tension de l'allumage du véhicule sont considérés comme des données.

9. Procédé selon l'une quelconque des revendications précédentes, **caractérisé en ce qu'**un chauffage de l'habitacle du véhicule, en cas de fonctionnement interrompu du moteur à combustion interne, se produit seulement si la tension du circuit de bord (U_{B}) dépasse une valeur limite de tension (Uₘᵢₙ).

10. Procédé selon l'une quelconque des revendications précédentes, **caractérisé en ce que** le chauffage de l'habitacle du véhicule, en cas de fonctionnement interrompu du moteur à combustion interne (9), se produit en fonctionnant en mode air ambiant ou air ambiant partiel.

11. Procédé selon l'une quelconque des revendications précédentes, **caractérisé en ce que**, lors du chauffage de l'habitacle du véhicule en cas de fonctionnement interrompu du moteur à combustion interne (9), le flux de masse d'air traversant l'échangeur de chaleur de chauffage (16) et / ou l'accumulateur de chaleur (15) est réduit à son niveau minimum.

12. Procédé selon la revendication 11, **caractérisé en ce que** le flux de masse d'air est déterminé en fonction d'au moins l'une des variables telles que la température extérieure (T_{A}), la différence entre la température extérieure et la température prédéfinie (T_{théorique}), et l'ensoleillement (S).

13. Procédé selon l'une des revendications 11 ou 12, **caractérisé en ce que** le fonctionnement de la soufflante (13) du système de climatisation (10) se produit en fonction d'une courbe caractéristique de décharge de l'accumulateur de chaleur (15), où la courbe caractéristique de décharge (15) est prédéfinie, en particulier, en fonction d'au moins l'une des variables telles que la température extérieure (T_{A}), l'ensoleillement (S), la température d'air évacué de l'échangeur de chaleur et la température (T_{I}) de l'habitacle.

14. Procédé selon l'une quelconque des revendications précédentes, **caractérisé en ce que** le guidage d'air et la répartition de l'air aux buses de sortie d'air sont régulés dans le sens d'un effet de chaleur maximum se produisant dans la zone corporelle des occupants du véhicule.

15. Procédé selon l'une quelconque des revendications 8 à 14, **caractérisé en ce qu'**une suppression de l'interruption du fonctionnement du moteur à combustion interne (9) intervient dans la mesure où la puissance de chauffage pouvant être obtenue au cours du fonctionnement interrompu du moteur à combustion interne (9) ne dépasse pas une variable minimum, où la variable minimum est prédéfinie, de préférence, par une durée de charge minimum (tₘᵢₙ) et / ou par une température minimum (Tₘᵢₙ) dans l'accumulateur de chaleur, où l'état de charge minimum se produit, en particulier, en fonction d'au moins l'une des variables telles que la température extérieure (T_{A}), l'ensoleillement (S) et la différence (dT) entre la température extérieure (T_{A}) et la température prédéfinie (t_{héorique}).
